# EUROPEAN PATENT APPLICATION

(11) **EP 4 848 500 A2**
(43) Date of publication of application: **02.12.2026**
(21) Application number: 26212224.5
(22) Date of filing: 10.08.2023
(51) Int. Cl.: H01S 3/23

(54) **OPTICAL PATH LENGTH ADJUSTMENT FOR MULTI-CHANNEL OPTICAL SYSTEMS**

(30) Priority: 15.08.2022 IL 29565622
(62) Document number(s) of the earlier application(s) in accordance with Art. 76 EPC: 23854634.5 / 4 540 650
(71) Applicant: Elbit Systems Electro-Optics - Elop Ltd., 7670305 Rehovot (IL)
(72) Inventor: LEVY, Daniel, 7670305 Rehovot (IL); NAZAROV, Andrey, 7670305 Rehovot (IL); SCHIFFER, Zeev, 7670305 Rehovot (IL)
(74) Representative: Pearl Cohen UK

(57) **Abstract**

Systems, methods and subsystems for adjustment of optical path length (OPL) of optical beams of a multi-channel optical system, by using an OPL adjustment subsystem that includes an array of OPL adjustors, each configured and located to controllably adjust OPL of an optical beam of a corresponding optical channel. For each optical beam of each optical channel one or more updated properties associated with the optical beam is detected to determine, based on detected data analysis, required one or more updated adjustor-control properties, for achieving an associated desired OPL adjustment of the corresponding optical beam. Each OPL adjustor is controlled to adjust the OPL of its corresponding optical beam, according to the determined one or more updated adjustor-control properties. The detection, analysis and/or OPL adjustment may be performed in a parallel manner to all optical channels of the multi-channel optical system.

## Description

### FIELD OF THE INVENTION

The present disclosure generally pertains to optical path length (OPL) adjustment and more particularly to OPL adjustment of each optical beam propagated through channels of a multi-channel optical system.

### BACKGROUND

Coherent beam combining (CBC) typically involves combining multiple high-power optical beams of similar spectral characteristics, into a single optical beam formed in a near field (NF) traversing plane as an array of output optical beams propagated in parallel to one another to form a concentrated light spot at a far field (FF) traversing plane. CBC performances is measured, inter alia, through its FF beam quality, typically associated with system energy losses and/or energy/power spatial distribution/concentration of the combined optical beam obtained from the CBC system in a FF traversing plane.

FF beam quality can be expressed as power in the bucket (PIB) performances of the combined beam, which is indicative of the spatial concentration of power/energy of the combined beam in a FF traversing plane. In CBC systems, FF performances (beam quality) of the combined beam outputted from the CBC system/setup, is usually highly sensitive to differences in phase, polarization and optical path length (OPL) between the input optical beams to be combined by the CBC system and the phase, polarization and OPL of the output optical beams outputted from the CBC system.

For example, a high PIB value is associated with low energy losses and/or with a high energy concentration within a single spot having a low spatial distribution (low spot spreading) of the combined beam in the FF, and is optimal when all input beams being combined by the CBC system are of correlated or same polarizations, phases and OPLs enabling all beams outputted from the CBC system to constructively interfere with one another in the FF.

### SUMMARY

Aspects of disclosed embodiments pertain to a detection and control subsystem for a multi-channel optical system guiding multiple optical beams through a guiding unit thereof comprising at least one fiber array of optical fibers, defining thereby an array of optical channels, the detection and control subsystem including at least:
(i) an optical path length (OPL) adjustment subsystem comprising an array of OPL adjustors each OPL adjustor being configured and located to controllably adjust OPL of an optical beam of a corresponding optical channel of the multi-channel optical system; and
(ii) at least one control unit configured at least to:
   for each optical beam of each optical channel of the multi-channel system:
   receive detected one or more updated properties associated with the optical beam;
   analyze the received one or more properties to determine required one or more updated adjustor-control properties, for achieving a desired associated OPL adjustment of the optical beam; and
   control the OPL adjustor of the optical channel, according to the determined one or more updated adjustor-control properties, for adjusting OPL of the optical beam, wherein the detection, analysis and OPL adjustment are performed in a parallel manner to all optical channels of the multi-channel optical system.

Other aspects of disclosed embodiments, pertain to a method for adjusting optical path length (OPL) of a multi-channel optical system using a fiber array of multiple optical fibers for guiding corresponding multiple optical beams therethrough, defining a corresponding array of optical channels, the method comprising at least:
providing an OPL adjustment subsystem comprising at least one array of OPL adjustors, each OPL adjustor being configured at least for adjusting OPL a corresponding optical beam of the multi-channel optical system;
providing a control unit configured for processing received data and controlling at least each OPL adjustor;
for each optical channel:
detecting one or more updated optical properties associated with the optical beam of the corresponding optical channel, outputted from the multi-channel optical system, using a detection unit;
analyzing the received one or more optical properties of the optical beam of the corresponding optical channel, to determine one or more updated adjustor-control properties associated with a corresponding required updated OPL adjustment for the optical beam propagated through the corresponding optical channel, using the control unit; and
adjusting OPL of the corresponding optical beam by controlling a corresponding OPL adjustor, according to its determined one or more updated adjustor-control properties, using the control unit, wherein the detection, analysis and OPL adjustment are performed in a parallel manner to all optical channels of the multi-channel optical system.

Additional or alternative aspects of disclosed embodiments pertain to an OPL adjustor for adjusting OPL of an optical beam passed through an optical fiber, where the OPL adjustment is based on temperature control of one or more fiber sections of the optical fiber or an added fiber-section connected thereto.

Additional or alternative aspects of disclosed embodiments pertain to an OPL adjustor for adjusting OPL of an optical beam passed through an optical fiber, where the OPL adjustment is based on routing of the optical beam via one of several selectable optical routes.

### BRIEF DESCRIPTION OF THE FIGURES

The figures illustrate generally, by way of example, but not by way of limitation, various embodiments discussed in the present document.

For simplicity and clarity of illustration, elements shown in the figures have not necessarily been drawn to scale. Reference numerals may be repeated among the figures to indicate corresponding or analogous elements. The figures are listed below.
**Fig. 1** shows how a coherence length ΔLc of a light source used for a coherent beam combining (CBC) system can be determined and its corresponding desired and/or minimum optical path difference (OPD) between optical beams combined by a CBC unit of the CBC system, according to some embodiments.
**Fig. 2** shows a CBC system using a detection and control subsystem including an OPL adjustment subsystem embedded therein, according to some embodiments.
**Fig. 3A** shows a single channel system using a single utilization optical fiber with a temperature control element coupled to one or more sections thereof and a reference optical fiber for OPL adjustment by length adjustment of the utilization optical fiber that are based on measurements associated with interference between an optical beam outputted from the length-controlled utilization optical fiber and a reference beam outputted by the reference optical fiber, according to some embodiments.
**Fig. 3B** shows a schematic illustration of difference in interference intensity sequences.
**Fig. 4** shows one implementation of a controllable temperature adjustor which includes a thermally conductive element, where the thermal control of a section of an optical fiber is done by having a section of the optical fiber being wrapped around the thermally conductive element, according to some embodiments.
**Fig. 5** shows another implementation of a controllable temperature adjustor which includes a thermally conductive wire or strap that is being wrapped around a section of the optical fiber, according to some embodiments.
**Fig. 6** shows a flowchart schematically illustrating a process/method for per-channel temperature-control-based fiber length adjustment for OPL adjustment of a plurality of input optical beams, for a CBC system, according to some embodiments.
**Fig. 7** shows a flowchart schematically illustrating a process/method for per-channel temperature-control-based fiber length adjustment for OPL adjustment of a plurality of input optical beams, of a CBC system, that incorporates using a reference optical beam for CBC channels' optical path differences (OPDs) measuring, according to some embodiments.
Fig. 8 shows a schematic illustration of a multi-channel optical system using a detection and control subsystem that uses an OPL adjustment subsystem that is based on temperature control by adding an additional fiber-section spliced/connected to the optical fiber of each respective channel, for OPL adjustment by illumination of the added fiber section, according to some embodiments.
Fig. 9 is a flowchart, schematically illustrating a method for temperature control based OPL adjustment of OPL of multiple optical beams of a CBC system, according to some embodiments.
**Fig. 10** shows a schematic illustration of an OPL adjustor or part thereof that is based on opto-mechanical selectable routing of an incoming optical beam using a manifold of optical waveguides (fibers), according to some embodiments.
**Fig. 11** shows a schematic illustration of an OPL adjustor or part thereof that is based on opto-mechanical selected routing of an incoming optical beam using multiple reflectors, according to other embodiments.
**Fig. 12** is a flowchart, schematically illustrating a method for OPL adjustment of optical beams of a CBC system that is based on selected routing of each optical beam, according to some embodiments.

### DETAILED DESCRIPTION OF EMBODIMENTS

Aspects of disclosed embodiments pertain to systems, subsystems, units and methods for adjustment of optical path length (OPL) of one or more optical beams. The OPL adjustment may be implemented for any of many optional purposes such as, for example for reducing optical path differences (OPDs) of a multi-channel optical system such as a coherent beam combining (CBC) system or a spectral beam combining (SBC) system, e.g., for mitigating undesired OPL changes caused in such systems due to heat that is generated by the optical beams and/or other system devices causing, for example undesired changes in refractive index of each optical fiber of the multi-channel optical system, through which these optical beams are propagated. These undesired changes in refractive index may be inconsistent and different between the different optical channels of the system therefore affect the performances of the multi-channel system.

The terms "channel(s)" and "optical channel(s)" may be interchangeably used herein.

The terms "optical beam(s)" and "beam(s)" may be interchangeably used herein.

The terms "optical fiber(s)" and "fiber(s)" may be interchangeably used herein.

A multi-channel optical system such as a CBC system typically uses tens or even hundreds of high-power fiber amplifiers, and therefore will inevitably show dynamic changes in the OPL of the fibers causing dynamic OPDs between the different optical beams during operation of the system. These changes in OPDs may be dynamically mitigated by disclosed embodiments, in order to maintain efficient/improved CBC performances.

A major cause for changes in OPLs (causing OPDs) are thermal changes in the different optical fibers and/or sections thereof.

The OPL of an optical fiber may be estimated using the following mathematical relation between the integrate OPL of an optical beam passed through (guided by) the fiber and the fiber's length:
${OPL}_{fiber} = {\int }_{0}^{L} {n}_{fiber} \left(l\right) {dLl}_{fiber} ≅ {L}_{fiber} ⋅ {n}_{fiber}$ Where *n_{fiber}* is the average value of the refraction index along fiber.
a dependency of OPL on temperature change Δ*T* yields the optical path difference (OPD) may be roughly expressed by:
${OPD}_{fiber} \left(ΔT\right) = {α}_{T} ⋅ {n}_{fiber} ⋅ Δ {T}_{operation} + {α}_{n} ⋅ {L}_{fiber} ⋅ Δ {T}_{operation}$

Where ${α}_{T} = \frac{{dL}_{fiber}}{dT}$ is the coefficient of thermal expansion (CTE) and $\frac{{dn}_{fiber}}{dT}$ is the slope representing refractive index change with temperature.

Fused Silica has a low CTE, which means that the material will expand/contract only slightly with temperature. The CTE for Fused Silica is about *α_{T}* =0.55 x 10-6/ °C over a 0°C- 200°C (Celsius degrees) temperature range.

The $\frac{{dn}_{fiber}}{dT}$ for Fused Silica is *αₙ* = 1.1x10-5/°C at 1064nm (nanometer), near room temperature which is significant for various implementations of the present invention.

For example, if there is a temperature change of ΔT=1°C between two fibers, then the change in the refractive index will be from 1.4496 to 1.449611, this means that over 30m (meters) of fiber the optical path difference will be 0.33mm (millimeter). This change is already greater than the required path difference between the channels thereby may affect beam combining performances such as increasing energy/power losses and affect (increase) spatial energy distribution of the combined beam at a far field (FF) traversing plane.

In order to control the OPL of each optical beam in a multi-channel optical system, we can use the effect of change in refractive index due to change in the fiber temperature by changing (controlling) the temperature of the fiber or one or more sections thereof, at least to actively heat one or more fiber sections of one or more optical fibers of the system, by using one or more heating elements/devices or by using optical radiation (light) that will heat the fiber section(s) through heat absorption, thereby controlling the overall length of each optical fiber.

According to other embodiments, one or more opto-mechanical elements may be used for controlling OPL of each optical beam, e.g., by controllably route the optical beam through one of various routes (optical paths and/or guides) of different lengths, available by the OPL adjustment means.

Embodiments of the invention disclosed herein may be aimed at enabling adjusting optical path lengths (OPLs) of optical beams passed through optical fibers by adjusting length of each optical fiber. The fiber length adjustment may be done by heating and/or cooling (temperature adjustment/control) of one or more sections of the optical fiber, using one or more temperature control means coupled to the one or more fiber sections such as one or more electronically controllable heat conductive elements, one or more thermoelectric coolers (TECs) etc.

CBC systems require low OPDs between the input beams being used for achieving high FF performances of a combing beam generated by the combining of the input beams. Multiple optical fibers are often used for guiding the multiple optical beams of the CBC system, for easy and stable optical alignment of the input optical beams to be combined with other optical elements and/or setups of the CBC system. Achieving low/minimal OPDs between the different input optical beams when using multiple optical fibers requires that the initial overall length of all the fibers of the CBC system are either equal to one another or accurately differ from one another at a specific and accurate rate, to achieve coordinated OPLs of the beams passed therethrough. Inaccuracies or deviation in OPLs of the input optical beams may cause unwanted OPDs between channels of the CBC system, and consequentially affect beam combining performances.

OPL inaccuracies or mismatching often occur due inaccuracies and/or changes in optical fibers' lengths caused due to fiber-manufacturing and/or cutting accuracy limitations, and/or due to overheating or overcooling of the fibers in an uncontrollable manner during operation of the system due to heat generated by the beams passed within the fibers, especially when using high power amplifier fibers, and/or due to uneven heating/cooling of the fibers resulting from external/environmental causes. The heating/cooling of the fibers in an uncontrolled manner may cause uncontrollable fiber length changes, which may likely result, especially in case of a CBC system, in ongoing CBC performances' degradation/impairments due to ongoing different changes in length of each of the fibers being used and consequential ongoing and changing OPDs between the beams.

Additional objective of embodiments of the present invention may pertain to enabling ongoing OPL adjustment for each optical fiber of a fiber array used in a CBC system, by using a separate per-channel OPL adjustment of optical fibers being used, for improving at least FF combined beam performances such as for improving FF combined beam power in the bucket (PIB) performances.

The optical path difference (OPD) between the input optical beams, to be combined by a CBC system, dictates the contrast at which these beams may interfere. Low contrast means poor combination efficiency and thus poor PIB. To achieve appropriate modulation depth or contrast values that enable 99% of potential combination efficiency, OPD should be significantly shorter than the coherence length ΔL*_{c}* of the light source used for generating the input optical beams, for achieving optimal/improved CBC FF performances. The contrast may be calculated as the following ratio (MAXamp-MINamp): (MAXamp+MIN amp), wherein amp refers to the amplitude value).

For example, a source laser with wavelength of 1µm (micrometer) and a spectral width of 50GHz, would have a coherence length of 1.9mm. This means that an OPD of 1.9mm between channels of the CBC system e.g., that uses a single (split) light source, would cause a decrease in modulation depth between the input beams of 1/e. In a CBC system that uses a multitude of high-power fiber amplifiers, an efficient combining would require that the OPD between all channels would be at least about an order of magnitude smaller than the coherence length ΔLc such as lower than 200µm (0.2mm) in the above example.

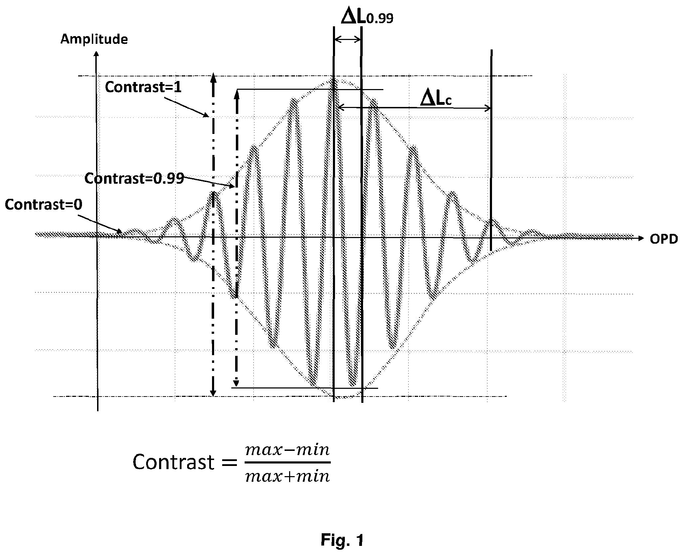

**Fig. 1** shows how the coherence length ΔLc can be determined by measuring the length between the maximum and minimum amplitude peaks of the light source outputted optical signal, and based thereon, how a desired achievable OPD length can be determined by verifying that it is equal to or less than the coherence length ΔLc. For example, to achieve a potentially 99% CBC efficiency of a CBC system using a single (split) light source, the desired OPD should be lower than 10% of the coherence length ΔL_{0.99} of the light source output optical signal, for achieving an amplitude contrast of 0.99. Aspects of disclosed embodiments pertain to CBC systems that use multiple optical fibers for guiding corresponding multiple input optical beams, defining multiple channels of the CBC system, where the CBC system has an OPL adjustment subsystem or mechanism embedded therein for ongoing or periodic OPL adjustment that is based on parallel per-channel OPL adjustment that is done by separate (per-fiber) controllable OPL adjustor (at least one OPL adjustor for each fiber/channel of the CBC system) .

The term CBC may relate to any CBC system/method that combines multiple input optical beams having same or similar spectral properties, such as same/similar wavelength (WL) and/or WL bandwidth.

The input optical beams used for CBC may also have the same or similar other optical properties such as same/similar beam profile properties, same/similar wavefront properties, etc.

Aspects of disclosed embodiments pertain to an optical path length (OPL) adjustment subsystem for a coherent beam combining (CBC) system using a guiding unit that includes at least one fiber array of multiple optical fibers such as multiple amplifier fibers, for guiding corresponding multiple input optical beams therethrough, defining an array of optical channels, by real time (RT) or near RT measuring and/or determining required beam OPL adjustment and corresponding temperature-control-based per-fiber (also referred to herein as "per-channel") adjustment of OPL of each of the optical fibers of the fiber array according to specific determined beam OPL adjustment of each specific input optical beam guided by each specific corresponding optical fiber.

According to some embodiments, the CBC system may include a CBC unit including any one or more CBC devices and/or elements for side-by-side CBC (e.g., using at least one array of collimators and/or beam shapers) or field-aperture CBC using a single diffractive element for combing all inputted optical beams such as a diffraction grating element, for outputting (in a near field traversing plane) an array of coherent optical beams of propagation direction that is mutually parallel such that the propagation directions of all output optical beams are parallel to one another and optionally also other similar optical properties such as phase, phase and/or energy distribution, polarization, etc.

According to some embodiments, the per-channel OPL adjustment of optical beams of the CBC system may be based on at least one detectable property/parameter of the optical beam of each channel such as intensity/power of each optical beam outputted from the CBC unit or intensity/power of each interference signal between optical beam of each channel and a reference optical beam, using, for example, an array of optical detectors, each located and configured to detect intensity of an optical beam or interference signal of a different channel.

According to some embodiments, the OPL adjustment of each optical beam of the CBC system may be carried out to optimize/reduce/minimize the OPD between the optical beams of the CBC system for improving one or more beam combining performances related properties such as for reducing/minimizing energy loses, reducing/minimizing power in the bucket (PIB) in a far field (FF) traversing plane, which is associated with the energy/power distribution of the combined beam spot over a FF traversing plane etc.

According to some embodiments, the OPL adjustment subsystem may be configured to receive and analyze output data/signal(s) from each of an array of optical detectors, configured and located to detect intensity related parameter value of each channel (e.g., intensity of interference of each optical beam outputted from the CBC unit and a corresponding portion of a reference optical beam) in an ongoing and parallelly manner from all detectors, determine required OPL adjustment for each optical beam and control operation of at least one OPL adjustor of each channel for adjusting the OPL of each optical beam in order to enable controlling/adjusting OPD between the multiple channels of the CBC system e.g., for reducing OPD between the optical beams.

The OPL adjustors of the OPL adjustment subsystem may be designed to adjust the OPL of each optical beam by controlling the overall one or more fibers total length(s) through which the respective optical beam propagates, e.g., by adjusting length of one such fiber for each channel by heating or cooling (temperature controlling) thereof or by routing the optical beam via a multi-path optical guide such as a manifold of routing optical fibers configured for route-length adjustment and control or a controllable/adjustable reflection-based multi-path.

According to some embodiments, the OPL adjustment subsystem may include:
(i) an OPL adjustment array comprising at least an array of per-fiber controllable OPL adjustors, each controllable OPL adjustor may be coupled or located adjacently to at least one section of a different corresponding optical fiber of the fiber array and configured for adjusting the OPL of a corresponding input beam guided thereby, by temperature-control-based adjustment of an overall length of the corresponding optical fiber; and
(ii) a control unit configured at least to:
   receive one or more updated measured properties associated with each output optical beam of each optical channel, each corresponding output optical beam emanating from a CBC unit designed and positioned to combine all input optical beams outputted from the fiber array;
   for each optical channel:
   analyze the received one or more measured properties of the corresponding output optical beam to determine updated required OPL of the corresponding input optical beam and its corresponding required fiber-temperature-adjustment; and
   control a corresponding temperature adjustor of the corresponding optical fiber, for adjusting overall length of the corresponding optical fiber in order to adjust OPL of the corresponding input optical beam.

According to some embodiments, the measuring of the one or more properties and temperature control may be performed per-channel in a parallel manner, to all channels of the CBC system, simultaneously or near-simultaneously, in a feedback loop recursive manner, for improving far field (FF) beam combining performances of the CBC system.

According to some embodiments the OPL adjustment subsystem may be embedded in the CBC system such that it uses measuring, processing and/or control hardware and/or software means of the CBC system also used for other CBC purposes, for measuring/determining required OPL adjustment for each channel and/or for temperature control for fibers lengths adjustments. For example, the same detection means may be used for closed/feedback loop per-channel OPL, phase and/or polarization adjustment and coordination to enable optimized and compact improvement of FF CBC performances by enabling ongoing simultaneous or pseudo simultaneous coordination (e.g., matching) OPLs, phases and polarization of all input optical beams of the CBC system.

According to some embodiments, the OPL adjustment subsystem may also include a sensors array comprising multiple temperature sensors, each temperature sensor being located and configured for direct measuring of temperature in proximity to a temperature control area of the corresponding optical fiber where the at least one temperature adjustor corresponding thereto is located.

According to some embodiments, the OPL adjustment subsystem may also be configured to estimate/calculate a "temperature-adjustment period" (TAP) which is an estimation of the time required to heat/cool the fiber section(s) of the specific optical fiber for achieving the required fiber length that corresponds to the required OPL of an input beam passed therethrough. The OPL adjustment subsystem may also be configured to control the heating/cooling of the fiber section(s) based on the estimated TAP.

It should be noted that the TAP may depend on a temperature difference ΔT between estimated/known current fiber section temperature and the new temperature that is estimated to be required for obtaining the desired fiber length and corresponding beam OPL, such that for example heating the fiber may require a known "Th" time period per each Celsius degree been added (heating) and a known "Tc" time period per each Celsius degree been reduced (cooling), where Tc and Th may be equal or different, depending on the temperature control device and method being used.

For example, if the temperature adjustors being used are heat elements that can only be actively heat yet can only perform passive cooling (by natural heat dissipation), where each temperature adjustor is coupled to a fiber section of a different fiber, Tc may be much larger than Th.

In other cases, in which the temperature adjustors being used enable both active heating and active cooling, Tc may be either equal or much closer in value to Th in respect to the passive cooling case.

Accordingly, the OPL adjustment subsystem may be adapted in terms of heating and cooling TAP calculations/estimations to the specific temperature adjustors' type being used and its associated heating and cooling TAP values.

In some cases, depending on light source properties for example, the changes in phase of each input optical beam may be much more rapid than changes in OPL of the input optical beams. Furthermore, the speed at which the overall fiber-length may be adjusted may also be much lower in comparison with the phase change speed and/or phase adjustment speed. One solution may include ongoing performing of the OPDs measurements along with phase related measurements adapted to CBC system phase changes speed and performing OPL temperature-control-based fiber lengths adjustments at a different speed adapted to time required for heating or cooling the fiber section for achieving required corresponding fiber-length.

According to some embodiments, the CBC system may also include (in addition to OPL adjustment related components and operation) components, devices and/or operations for example for phase and/or polarization adjustments, optical aberrations correction, beam shaping etc. such as any one of the components and/or operations described in the following references, which are herein incorporated by reference: WO2020/174461A1; WO2022/003669A1; IL284740; and IL294523.

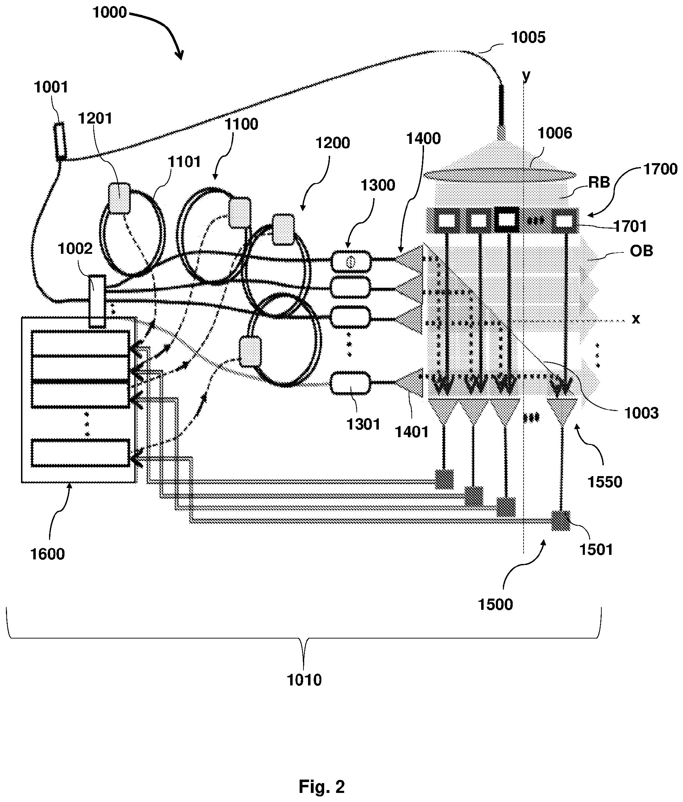

Reference is now made to **Fig. 2****,** showing a multi-channel optical system such as a CBC system **1000** using a detection and control subsystem **1010** that includes an OPL adjustment subsystem or mechanism embedded therein, according to some embodiments.

The CBC system **1000** may include:
an illumination unit including a single light source **1001** and a beam divider **1002** configured to split light emanating from the light source **1001** to form an array of input optical beams of similar optical properties such as similar wavelength (WL) and optionally of similar phase and/or energy spatial distribution (profile);
a guiding unit including at least a fiber array **1100** including multiple optical fibers **1101** where all fibers **1101** are connected/coupled to the beam divider **1002** to have each input optical beam formed by the beam divider **1002** to be guided by a different corresponding optical fiber **1101** of the fiber array **1100;**
a CBC unit **1400** configured and position to receive the array of input optical beams outputted from output ends of the fibers **1101** of the fiber array **1100,** where the CBC unit **1400** may include at least one CBC optical element such as a diffraction grating element (for field-aperture CBC) or at least one array of optical elements such as CBC elements **1401** (for side-by-side CBC), such as at least an array of collimation lenses, a beam shaping array(s), errors correction array etc. such as taught in any one or more of patent or patent applications: US2023134874A1, WO2023281513, IL294523, IL284740;
a detection and control subsystem **1010** comprising:
   an OPL adjustment subsystem comprising at least an OPL adjustors array **1200** including multiple per-channel OPL adjustors **1201** each OPL adjustor may be coupled to or located in vicinity of a fiber section of a different optical fiber **1101** of the fiber array **1100,** each OPL adjustor **1201** being configured to controllably adjust overall OPL of the corresponding input optical beam passed therethrough and guided thereby;
   (optionally) a phase locking unit including a phase adjustment array **1300** including multiple per-channel phase adjustors **1301** configured to controllably adjust phase of a different input optical beam;
   a referencing unit comprising:
      a beam splitter (BS) **1003** for simultaneous splitting of each of all output optical beams, outputted from the CBC unit **1400** such that a first portion of each output optical beam **OB** is directed to a first propagation direction e.g., parallel to a first propagation axis x which may be parallel to an optical axis of the CBC system, and a second portion of the output optical beams in a different direction parallel to a second propagation axis **y** that is angular (e.g., orthogonal) to the first propagation axis **x;**
      a reference fiber **1005** connected directly or indirectly to the light source **1001** or directly to the beam divider **1002,** to direct/guide a reference optical beam **RB** of similar/same optical properties of the light/beam outputted by light source **1001,** such as to output the reference optical beam **RB** that is spatially distributed and propagated in a manner that it will cause it to interfere simultaneously with each of the output optical beams that are directed by the BS **1003** to propagate in parallel to the second propagation direction, e.g., such that the propagation direction of the reference beam **RB** is substantially parallel to the second propagation direction;
      a detection unit **1500** including an array of optical detectors **1501** such as an array of photodetectors and optionally also a lenslet array **1550,** configured at least to detect per-channel, intensity related properties of interference singles caused by the interference of each output beam portion directed along the second propagation direction and the reference optical beam **RB,** such that each optical detector **1501** is positioned for measuring one or more characteristics such as intensity of a corresponding interference signal of a different channel and output updated intensity related data (which may be in a form of an electrical signal) indicative of the measured intensity of the corresponding interference signal; and
      a main controller **1600** configured, for each channel "i" of the CBC system **1000** at least to:
         (a) receive updated intensity related output data of value Ii of an interference signal of channel "i", detected via the corresponding optical detector **1501** of the detection unit **1500;**
         (b) process the received updated intensity related data of value Ii to determine at least one of:
            - updated required OPL adjustment OPLi of the corresponding input optical beam of the respective channel "i" and its corresponding updated required fiber length FLi and corresponding updated required temperature adjustment Tai (and optionally also estimated temperature adjustment period TAPi value) and/or required updated adjustor-control properties, for controlling the OPL adjustor of the respective channel "i" for achieving an associated desired/required OPL adjustment of the corresponding optical beam; and
            - control the corresponding OPL adjustor of the channel "i" according to its determined updated adjustor-control properties for improved/optimal FF CBC performances.

The above operations of the main controller **1600** may be done in a recursive/periodic/ongoing feedback loop manner, and in parallel for all channels of the CBC system **1000.**

According to some embodiments, the OPL adjustment of each channel may be done to achieve an extremum minimum or maximum intensity/power value of the interference signal of the respective channel and adjust/lock OPL of the corresponding input optical beam when the interference signal of the interference of its corresponding output optical beam with the reference optical beam **RB** achieves maximum constructive or destructive interference. For example, the main controller **1600** may be configured to orderly change (increase and decrease at preset shifts) the phase of each input optical beam, to different values over time, and detect/identify when the overall interference signal power/intensity value outputted from the corresponding optical detector **1501,** reaches a maximal value (in reference to previously and recently measured intensity related signal values of the channel) and lock the phase at that phase rate.

According to some embodiments, the detection and control subsystem **1010** may further include phase and/or polarization locking means for parallel locking phase and/or polarization orientation/directionality of each of the input optical beams, which may also be based on analysis/processing of the updated intensity related data outputted from the optical detectors **1501** of the detection unit **1500** and based on detection/determination of an extremum value of the intensity of the interference signal of each optical channel.

The phase and/or polarization of each input optical beam may be controlled/adjusted via its corresponding phase and/or polarization adjustor and control OPL adjustor **1201.**

According to some embodiments, the OPL, phase and/or polarization adjustment of each input optical beam of each channel may be done by changing/shifting the phase, polarization and/or OPL by a predefined shifting step and identifying when the change causes the intensity/power of the interference signal to reach an extremum i.e., maximum or minimum value between all two or more previously measured interference signal intensities of the same channel "i" for a short measuring period Δt.

According to some embodiments, since the intensities of the interference signals of all channels are parallelly measured by the detection unit **1500,** the phases and/or polarizations and the OPLs of each input optical beam may be locked according to the same extremum intensity detection/identification enabling parallel detection and control of all input optical beams' OPL and phase and/or polarization, also using the same control unit such as main controller **1600.**

According to some embodiments, the CBC system **1000** may also include one or more mechanisms for beam steering of the combined optical beam formed by the output optical beams in a FF traversing plane. For example, as shown in **Fig. 2****,** the CBC system **1000** may additionally include a modulation array **1700** including multiple phase modulators **1701** such as spatial light modulators (SLMs) that may be positioned such that each phase modulator **1701** phase-modulates a different area of the reference optical beam **RB** before it interferes with a corresponding output optical beam. This allows controlled beam steering of the combined optical beam by setting the phase of each phase modulator to a different desired and pre-calculated phase such that its corresponding input optical beam will be automatically locked to a phase that corresponds thereto for achieving extremum value of intensity/power of the corresponding interference signal. The differences in phases between each input optical beam and consequently of its corresponding output optical beam may be adapted to a FF location of a target that is not necessarily aligned with the optical axis **x** of the CBC system **1000** and allow controllable steering of the combined optical beam at will and to any direction required by simply calculating the required phase differences needed between the optical beams. The phase-modulation may be controllable also by the same control unit such as main controller **1600,** which may also be configured for receiving steering information such as target location, etc. as input data arriving from human user(s) and/or from another control system.

Additionally or alternatively, controllable opto-mechanical means may be used for beam steering such as a reflector or an additional beam splitter with controllable positioning that can direct the output beams by reflecting thereof, where the angular positioning and/or location of the reflector/beam splitter may be adjustable in a controllable manner by the main controller **1600.**

According to some embodiments, in order to cause the reference optical beam **RB** to interfere with each of the output beams outputted directed by the BS **1003** to propagate in the second propagation direction, one or more optical elements may be used such as collimator **1006** (Fig. 2), a Fresnel lens, a phase element, a beam shaper and/or a convex lens, configured to form a reference beam having a wide/large enough spot with as even/unified as possible energy and/or phase spatial distribution.

According to some embodiments the main controller **1600** may be connected via wires to and/or wirelessly communicate with one or more of: each OPL adjustor **1201,** the light source **1001,** the beam divider **1002,** each phase adjustor **1301,** each optical detector **1501,** each phase modulator **1701,** for communication and/or control purposes.

According to some embodiments each OPL adjustor **1201** may include one or more heat conductive elements each coupled to a specific fiber section of its corresponding optical fiber **1101,** where each heat conductive element may be connected to the main controller **1600** via an electrical wire for actively and controllably heating of the heat conductive element for adjusting corresponding fiber length by extension thereof for OPL adjustment, and may perform passive cooling, by natural heat dissipation of the corresponding fiber section, for fiber length adjustment by contraction thereof, for corresponding OPL adjustment.

According to some embodiments, the main controller **1600** may use a preset table or data array or a preset calculation/algorithm that associates or enables calculating the value of a required OPL decrease or increase with a corresponding temperature increase or decrease. For example, for optical fibers of known physical properties such as initial and/or room temperature length, material from which the fibers are made, fiber diameter/dimensions, fiber cladding material and thickness, refractive indexing properties etc. and for known optical expected properties of the input beams such as WL and WL bandwidth, per-beam intensity/power peak value etc., a specific calculation function/equation may be set with coefficients' values adapted to the specific fibers and input beams known properties, that enable quick RT calculation of required temperature value or temperature difference value per channel, based on estimated required input beam OPL.

Additionally or alternatively a table or data array may be set, also based on pre-calculated relations between OPL and temperature values, for quick determination of the required temperature or temperature difference for the required input beam OPL.

For example, for a specific CBC system using known specific type of amplification fibers of known fiber physical properties, specific known temperature adjustors and the area of the fiber section they are coupled to, and known optical properties of the input beams, the main controller may have a preset algorithm that can estimate per each required OPL extension/contraction, the corresponding required ΔL length extension/contraction of the fiber and its corresponding required temperature increase/decrease e.g., in Celsius degrees and also the corresponding TAP time span required for the heating/cooling of the specific fiber section for achieving the required OPL extension/contraction.

According to some embodiments, an OPL adjustment subsystem of the CBC system **1000** may include: the OPL adjustors array **1200,** the detection unit **1500** and one or more hardware and/or software modules/units of the main controller **1600** that are associated with OPL adjustment and temperature control.

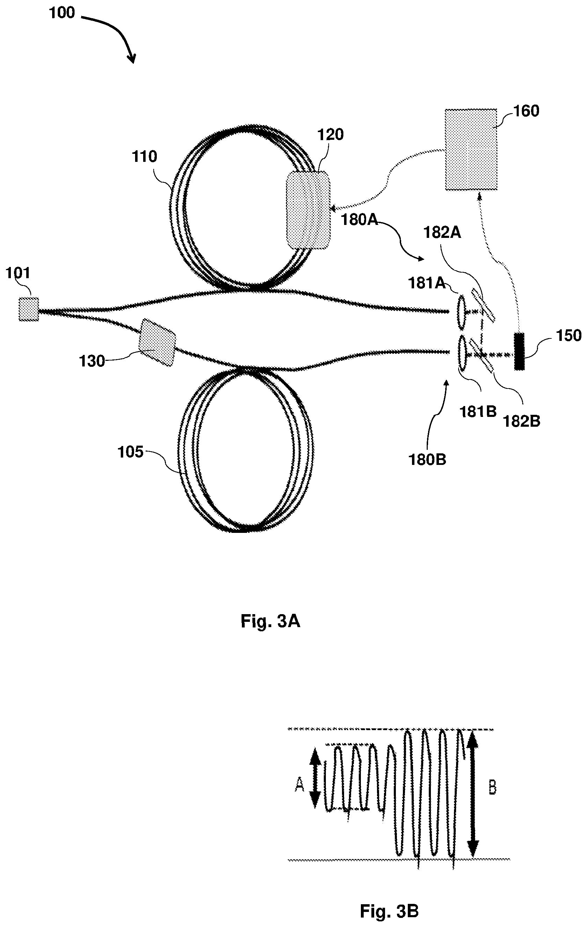

**Fig. 3A** shows an OPL adjustment subsystem **100** for temperature-control-based fiber length for OPL adjustment that uses a single utilization optical fiber **110** with a controllable temperature-control OPL adjustor **120** coupled to a fiber-sections thereof and a reference optical fiber **105,** according to some embodiments.

The reference optical fiber **105** may be used for correlating the OPL of a first optical beam guided by the utilization optical fiber **110** with that of a second optical beam (e.g., having same/similar optical properties to those of the first optical beam) guided by the reference optical fiber **105,** where both the first and second optical beams emanate from a same single light source **101.**

According to some embodiments of the OPL adjustment subsystem **100** may also include:
a first optical unit **180A** including for example a collimator **181A** and a beam splitter or a reflector **182A;**
a second optical unit **180B** including for example a collimator **181B** and a reflector or a beam splitter **182B;**
a single optical detector **150** positioned and configured to measure properties of an interference signal formed by the interference of the first and second optical beams emanating from the utilization and reference optical fibers **110** and **105,** respectively (where the interference thereof is enabled by the first and second optical units **180A** and **180B);** and
a controller **160** configured to receive updated output data/signal(s) from the optical detector **150** and process the received data/signals for determining OPL related updated adjustment required and its corresponding fiber-length and/or temperature adjustment; and to control the controllable OPL adjustor **120,** based on updated output data/signal(s) analysis results.

According to some embodiments, as shown in **Fig. 3A****,** the OPL adjustment subsystem **100** may further include a phase modulator **130** positioned, connected and used for modulating the phase of the second optical beam passed through the reference optical fiber **105.**

According to some embodiments, the phase modulator **130** may be configured to form/induce a short phase sequence (for example: "saw-tooth") on transmitted field of the second optical beam. Interference intensity sequence may be collected by means of a fast optical detector **150.** The contrast of this intensity sequence (as shown in **Fig. 3B** and explained in relation to **Fig. 1****)** between intensity amplitudes can be maximized by means of the controllable OPL adjustor **120** attached to the utilization optical fiber **110.** The OPD between the first and second optical beams may be minimized by means of a closed-loop or feedback loop mechanism based on the temperature of the fiber section of the utilization optical fiber **110** that achieves a maximal contrast value.

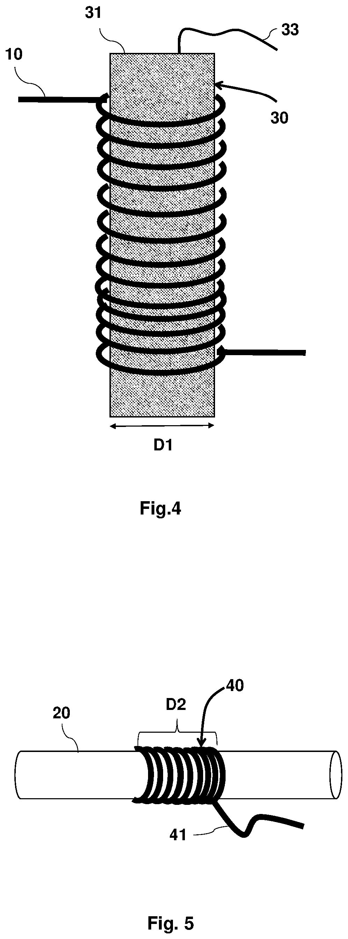

**Fig. 4** shows one implementation of a controllable OPL adjustor **30** which includes a thermally conductive element **31,** where the thermal control of a section of an optical fiber is done by having a section of the optical fiber **10** being wrapped around the thermally conductive element **31,** according to some embodiments. The heat conductive element **31** may connect to a controller via an electric wire **33** for enabling controllable heating of the heat conductive element **31** by controlling electrical voltage/current transmission to the heat conductive element **31** (which may be also electrically conductive).

According to some embodiments the length "L1" of the fiber section of the optical fiber **10** being in contact with the heat conductive element **31** of the controllable OPL adjustor **30,** is associated with the number of wrapping loops formed and the width or diameter **D1** of the heat conductive element **31.**

This controllable OPL adjustor **30** configuration may be easy to implement and compact in terms of occupied space it requires and may also enable some thermal isolation between the heat conductive element **31** of the specific optical fiber **10** and other adjacent fibers such that temperature adjustment of the specific fiber **10** will prevent or reduce fiber length changing of adjacent fibers, since the optical fiber **10** itself serves also as a coating element covering the heat conductive element **31** by being wrapped thereover.

**Fig. 5** shows another implementation of a controllable OPL adjustor **40** which includes a conductive element such as a thermally conductive wire **41** or strap that is being wrapped around a section of the optical fiber **20,** according to some embodiments. The thermally conductive wire **41** may connect to a controller via an electric wire **43** for enabling controllable heating of the thermally conductive wire **41** by controlling electrical voltage/current transmission to the heat conductive element **41** (which may be also electrically conductive).

According to some embodiments the length **D2** is defined as the length of the fiber section of the optical fiber **20** for temperature-control-based fiber length adjustment which also defines contact-area between the optical fiber **20** and the thermally conductive wire **41** of the controllable OPL adjustor **40.**

This controllable OPL adjustor **40** configuration may require coating of the exposed thermally conductive wire **41** with a thermal isolating coating such as a thermal isolating coating sleeve (not shown) for reducing/preventing/minimizing thermally effecting adjacent fibers but may enable easier and faster natural heat dissipation of the optical fiber **20** for faster cooling thereof.

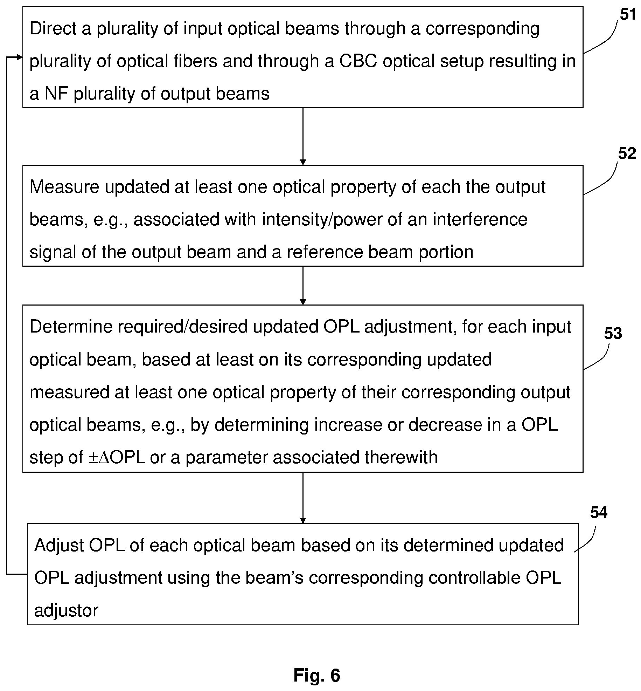

Reference is now made to **Fig. 6** showing a flowchart schematically illustrating a process/method for per-channel OPL adjustment of a plurality of input optical beams of a CBC multi-channel optical system, according to some embodiments. The method may include at least:
directing a plurality of input optical beams of the CBC system through a corresponding plurality of optical fibers and through a CBC unit resulting in a plurality of output beams in a near field (NF) area of the CBC system (step **51);**
for each optical channel "i" of the CBC multi-channel optical system (CBC system):
measuring updated at least one optical property associated with a corresponding output beam, such as an intensity related property (parameter value) of an interference signal of the corresponding output beam with at least a portion of a reference beam (step **52);**
determining required/desired updated OPL adjustment for each input optical beam, based at least on its corresponding updated measured at least one optical property and/or determine required one or more updated control properties for controlling a corresponding OPL adjustor (step **53);** and
adjusting OPL of each optical fiber based on its determined updated OPL adjustment by controlling the corresponding OPL adjustor of the respective channel, based on the determined required updated control properties (step **54).**

The above method steps for OPL adjustment may be carried out in a parallel manner to all optical channels of the CBC multi-channel optical system, by performing these steps **51-54** in an ongoing, reoccurring, recursive, closed-loop, continuous, or frequent manner such that the OPLs of all input optical beams of all optical channels of the CBC system are regularly measured/estimated and corrected for ongoing reduction/minimization of beams relative OPDs, in parallel to one another.

The OPL adjustment may be made by any technique and/or adjustor type such as, for example, by one or more of:
(i) by controlling length of one or more sections of one or more optical fibers through which each input or output optical beam of the CBC system is propagated by controlling temperature of each corresponding fiber section using one or more temperature control OPL adjustors; and/or
(ii) by controlling the OPL of each optical beam of the CBC system by using an opto-mechanical adjustor configured to control the length of the optical beam's propagation by controlling one or more mechanical and/or opto-mechanical elements such as by using multiple reflectors, where the positioning of at least one such reflector being mechanically controlled, or by using a fiber-manifold (per each channel of the CBC system) including multiple controllable routing switches for controlling a the fiber length through which the corresponding input/output optical beam is propagated by selecting one of multiple optional routes enabled by the fiber-manifold.

According to some embodiments, the method of **Fig. 6** may also include directing a portion of each output optical beam of the CBC system such as to interfere with a corresponding portion of a reference optical beam, such that the measuring of an updated at least one optical property associated with a corresponding output beam is indicative of an intensity value of an interference signals of the interference of the output optical beam portion and the reference beam portion, for each channel of the CBC system.

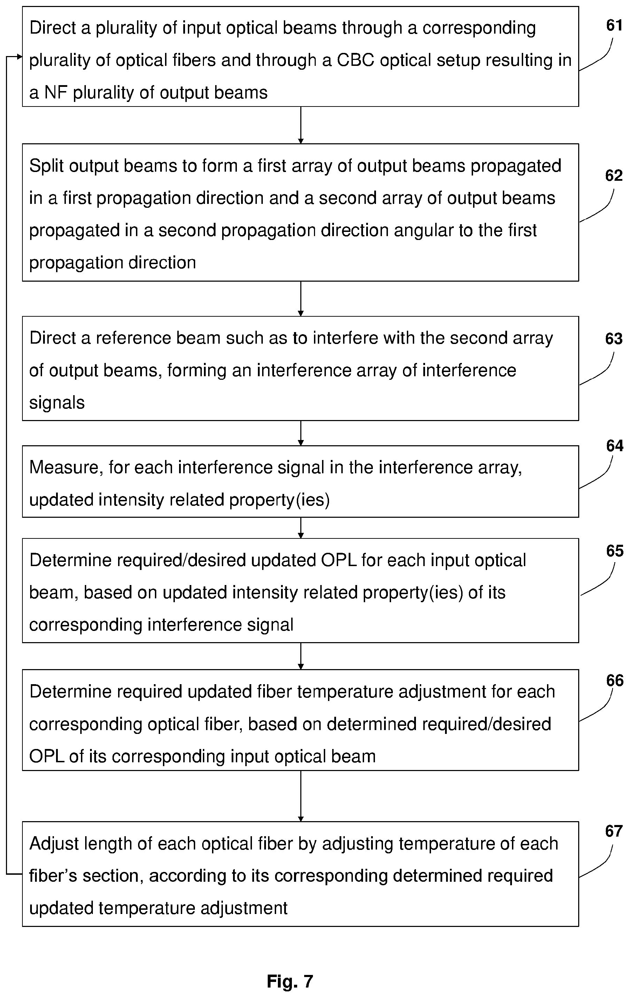

Reference is now made to **Fig. 7** showing a flowchart schematically illustrating a process/method for per-channel temperature-control-based fiber length adjustment for OPL adjustment of a plurality of input optical beams, of a CBC system, that incorporates using a reference optical beam for CBC channels' optical path differences (OPDs) measuring and control, according to some embodiments. This method may include at least:
directing a plurality of input optical beams through a corresponding plurality of optical fibers and through a CBC unit resulting in a NF plurality of output beams (step **61);**
splitting the output beams to form a first array of output beams propagated in a first propagation direction and a second array of output beams propagated in a second propagation direction angular to the first propagation direction (step **62);**
directing a reference beam such as to interfere with all beams of the second array of output beams, forming an interference array of interference signals (step **63);**
measuring, for each interference signal in the interference array, updated intensity related property(ies) (step **64);**
determining required/desired updated OPL adjustment or one or more required updated adjustor-control properties for each OPL adjustor of each input optical beam, based on updated intensity related property(ies) of its corresponding interference signal (step **65);**
(optionally) if a required OPL adjustment is determined, determining required updated fiber temperature adjustment for each corresponding optical fiber, based on determined required/desired OPL of its corresponding input optical beam (step **66);** and
adjusting length of each optical fiber by adjusting temperature of each fiber's section, according to its corresponding determined required updated temperature adjustment (step **67).**

The steps **51-55** and/or **61-67** of the above-described methods/processes may be implementable by using any one or more software and/or hardware computing, communication and control means and may require preset (and optionally programmable) executable actions for performing at least some of the steps.

The methods described above in relation to **Figures 5** and **6** may also include other CBC performances improvement related steps such as input beams phase and/or polarization adjustment.

The methods described above in relation to **Figures 6** and **7** may also include an initial calibration test or process, in which fibers lengths are physically matched as optimally as possible for minimizing channels OPDs, and OPLs or OPDs between each input beam and a same/similar reference beam interfering with each input beam are measured, to determine temperature-gap value ΔTG used for increasing and decreasing of temperature of the optical fibers section for performing OPL and fiber lengths adjustments. The temperature gap value ΔTG may determine how much the temperature is increased and decreased for respective fiber section heating and cooling. The calibration process may also be used to determine controllable temperature adjustors' TAPs for cooling and heating. The calibration process may also include measuring the rate (speed) at which OPLs are changing and/or exceeding a change rate that will affect CBC performances.

The calibration process may be carried out under a stabilized fixed external/environment temperature (such as standard room temperature of 25 Celsius degrees), and/or under a changing external/environment temperature and may be used for presetting temperature gap ΔTG value and cooling and heating TAP values relation to different environment temperatures for real time adjustment of a processing and control program being used by the main controller according to the actual external temperature being measured, for example, by a thermometer or any other temperature measuring means.

According to some embodiments, since input optical beams' phases may change much more rapidly than their OPLs, and since the OPL adjustments may require a much longer TAP than the phase change rate and adjustment, the OPL adjustment system and/or method may be programmed to coordinate OPL adjustment according to premeasured OPL change rate and TAP rates, and separately coordinate phase adjustment according to premeasured or known phase change rate.

According to other embodiments, each OPL adjustor of the multi-channel optical system may include an illuminator including one or more light sources and an added fiber-section connected to an optical fiber of a corresponding optical channel of the multi-channel optical system. In these embodiments, the OPL adjustment can be done by illumination of at least part of the added fiber-section for heating thereof, for extending the overall length of the added fiber-section for adjusting OPL of the optical beam propagated through the corresponding optical fiber and added fiber-section.

According to some embodiments, the added fiber-section may be of specific known optical absorbance properties, which may be different from the optical absorbance properties of the optical fibers used by the multi-channel optical system, such that the illuminator of the OPL adjustor is configured to emit light that correspond to the absorption properties of the added fiber-section to be absorbed thereby for heating and therefore extending thereof for OPL adjustment of the optical beam passed therethrough.

One or more illumination properties of the illuminator of the OPL adjustor may be controllable/adjustable. For example, the one or more illumination properties include one or more of:
illumination wavelength and/or wavelength bandwidth;
illumination intensity, power, amplitude, spatial distribution and/or flux;
radiation aperture;
radiation propagation directionality;
illumination duration; and/or
one or more pulsation properties.

According to some embodiments, the added fiber-section is a doped optical fiber, having at least one dopant with known optical absorbance properties, where the illuminator of the OPL adjustor is configured to emit light corresponding to the optical absorbance properties of the doped added fiber-section.

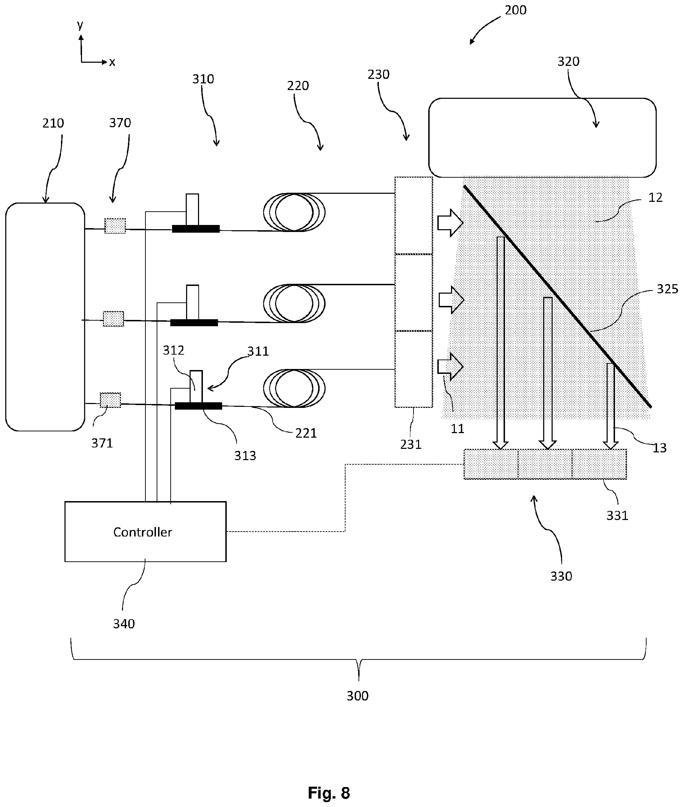

Reference is now made to **Fig. 8** schematically illustrating a multi-channel optical system such as a CBC system **200** defining multiple optical channels, that uses an embedded detection and control subsystem **300** that includes at least an OPL adjustment subsystem **310** including a plurality of OPL adjustors **311,** each OPL adjustor **311** including at least one illuminator **312** and at least one added fiber-section **313,** connected (spliced) or coupled to each optical fiber **221** of the fiber array **220** of the CBC system **200,** where the per-channel OPL adjustment of each optical beam of the multi-channel optical system may be based on heating (temperature control) by illuminating of the added fiber-section **313** by its corresponding illuminator **312,** according to one or more predefined and/or one or more adjustable/controllable illumination properties such as radiation/emission wavelength properties, pulsation properties, illumination (light) intensity/amplitude and/or flux etc.

The CBC system **200** may include:
an illumination unit **210** configured to generate a plurality of input optical beams of similar one or more optical properties such as similar wavelengths (WLs) or WL bandwidths and direct them into a fiber array **220** of multiple optical fibers **221;**
a CBC unit **230** that may include for example at least one CBC array of CBC elements such as a collimation array comprising an array of collimation lenses **231,** and/or an array of beam shaping units, configured to combine the input optical beams and output aa corresponding array of output optical beams propagated substantially parallel to one another, defining thereby an optical axis "x" which is parallel to the propagation direction of the output optical beams; and
a detection and control subsystem **300** which may include for parallel detection analysis(processing) and adjustment at least of OPL of each optical beam propagated through the CBC system **200** and optionally for adjustment of one or more additional beam properties such as phase and/or polarization.

According to some embodiments, the detection and control subsystem **300** may include:
an OPL adjustment subsystem **310** including at least an array of OPL adjustors **311,** each OPL adjustor of a corresponding optical channel "i", being located and configured for adjusting OPL of a corresponding incoming optical beam of channel "i" of the CBC system, where the OPL adjustment is based on illumination of a section of the corresponding optical fiber **221;**
a referencing unit **320** configured to generate and direct a reference optical beam **12** of desired (and optionally controllable/adjustable) optical properties such as a desired beam aperture, desired energy/intensity distribution, desired propagation direction etc.;
an optical setup including one or more optical elements and/or devices such as a beam splitter **325,** configured to sample a portion of each output optical beam **11,** outputted from the CBC unit **230** such as to interfere with a corresponding portion of the reference optical beam **12** forming thereby a corresponding interference signal **13;**
a detection unit **330** including an array of optical detectors **331,** each optical detector **331** being located and configured to detect updated intensity/energy of a corresponding interference signal **13;** and
a controller **340** configured to receive and analyze (process) intensity related updated data/signal from each optical detector **331** of the detection unit **330** to determine at least corresponding updated adjustor-control properties for controlling illumination of the corresponding OPL adjustor, for OPL adjustment of the input and/or output optical beam of its corresponding channel "i".

The intensity or intensity related value of each interference signal **13** may be transmitted to and received by the controller **340** which can process/analyze intensity related parameter value of each of all channels, at each given moment, for determining required OPL adjustment and/or its related one or more updated adjustor-control commands/properties such as duration of illumination, intensity/amplitude of illuminated light, spectral characteristics of the illumination and the like, for enabling optimal OPL adjustment by minimizing/reducing OPD between each output optical beam **11** and the reference optical beam **12** portion with which it interferes and thereby enable reducing/minimizing OPDs between all output optical beams **11** for improvising CBC performances such as PIB (power spatial distribution in a FF traversing plane), energy losses etc.

According to some embodiments, the OPL adjustment may be performed in a parallel manner such that all optical beams of all optical channels of the CBC system **200** are adjusted in parallel to one another, using a parallel per-channel detection, analysis/processing and adjustment process.

According to some embodiments, each OPL adjustor **311** may include one or more illuminators such as one or more light emitting diodes (LEDs) configured to illuminate the clad of the added fiber-section **313** such as to extend it and thereby adjust the OPL of the optical beam directed therethrough, by causing the light from the illuminator to be absorbed at the clad of the added fiber-section **313** of the OPL adjustor **311.**

Each illuminator may be configured to irradiate/illuminate light of spectral characteristics such as one or more wavelengths (WLs) or WL bands that correspond to absorbance characteristics of the added fiber-section or part thereof such as light of a specific WL or narrow WL bandwidth that is designed to be effectively absorbed by the material of the optical fiber's core and/or clad to directly heat the added fiber -section **313.** For example, the added fiber-section **313** or part thereof such as its clad may be doped with a doping substance such as Tm (Thulium) where the dopant has specific absorption lines and using an illuminator **312** that emits light in this/those specific absorbable wavelength(s). For example, for a Tm doped fiber illumination, a narrow WL band of illumination, peaking at 793nm may be used for enabling increased/maximal or good absorbance for quick and effective add fiber-section **313** heating at an intensity/flux that is designed for both effective fast heating yet such that will not affect optical or other properties of the input optical beam propagated through that added fiber-section **313** and/or that will not damage the optical fiber's clad and/or core in an irreversible manner.

Illuminating of the added fiber section **313** may be done externally to the added fiber-section **313** from the outer surface thereof (e.g., tangent to the added fiber-section **313** or illuminating a cross section of the added fiber-section **313)** or by coupling the light source(s) (illuminator **312)** of the OPL adjustor **311** to the added fiber-section **313** such that light irradiated by the illuminator **312** is propagated along the fiber and is gradually absorbed throughout at least part of the length of the added fiber-section **313.**

The temperature may be controlled by controlling one or more illumination properties of the OPL adjustor's **311** illumination such as the amplitude/intensity of the optical illumination, flux and/or spatial intensity distribution, illumination duration, aperture, radiation propagation directionality or by using a pulsed light source and adjusting the temperature by adjusting the number of pulses, duration of each pulse, energy distribution properties of each pulse and/or the duty cycle of the pulses.

Each OPL adjustor **311** may include one or more illuminators of the same or different type and/or illumination optical properties such: Light emitting diode (LED), Diode laser, flash lamp, Quantum Cascade Laser (QCL) or any other light source.

According to some embodiments, the optical fiber **221** may be undoped or doped by a different dopant than that of the added fiber-section **313** to avoid having light of a wavelength that is aimed at heating and extending the length of the added fiber-section **313** from also extending other proximal/adjacent areas of the optical fiber **221.** For example, the optical fiber **221** may be a Yd doped amplifier fiber doped with Ytterbium dopant while the added fiber-section **313** is doped with Thulium (Tm) as mentioned above, where the input optical beam of about 1,060nm (nanometer) will not be very well absorbed by the added fiber-section **313.**

According to some embodiments, the controller **340** may be configured to receive updated intensity related data from each optical detector **331** of the detection unit **330** indicative of intensity of the current/updated intensity of the interference signal **13** of the respective channel, and determine, based thereon, and optionally based on comparison between the received updated intensity related data with one or more preceding measurements, if an OPL adjustment is required for the corresponding optical beam and the required OPL adjustment control action(s) (updated adjustor-control properties) such as required illumination duration, flux and/or intensity and the like, and control the corresponding illuminator **312** of the corresponding OPL adjustor **311** according to the determined updated adjustor-control properties.

The controller **340** may be configured to determine a value of a required OPL addition ΔOPL based on the received updated intensity related data from the corresponding optical detector **331,** for determining the required OPL addition ΔOPL and based on the determined OPL addition ΔOPL, determine the required updated adjustor-control properties.

The adjustor-control properties may include one or more control commands/action and/or one or more controllable/adjustable illumination properties such as operating mode of the corresponding illuminator **312,** illumination duration and the like.

According to some embodiments, other one or more optical parameters of the optical beams propagated through the CBC system **200** may require adjustment and correlating in a parallel feedback loop manner such as phase, power/intensity spatial distribution, phase spatial distribution, polarization orientation and the like, for optimal CBC and FF performances, requiring one or more additional adjustors/controllers arrays such as phase shifters array **370** including multiple phase shifters, each phase shifter **371** boing positioned and configured to also lock a phase of its specific optical beam based on same measured intensity related parameter, of the interference signal **13,** detected by the optical detector **331** of the corresponding optical channel.

Therefore, the same detectors array of the same referencing unit **320,** optical setup (such as beam splitter **325),** detection unit **330** and same controller **340** may be used for parallel detection and adjustment of multiple properties of the optical beams of the multiple channels of the CBC system **200** including: OPL and OPD, phase, phase distribution, energy/intensity distribution, polarization and the like, all adjusted in parallel and in relation to one another, based on detected intensities of their respective interference signals interfering with a same reference optical beam **12,** and optionally, where each such property of OPL, phase etc. is locked when an extremum (maximal or minimal) interreference signal intensity is achieved.

According to other embodiments, each OPL adjustor may include an illuminator configured for external illumination of a section of the optical fiber **221** of the CBC system **200.**

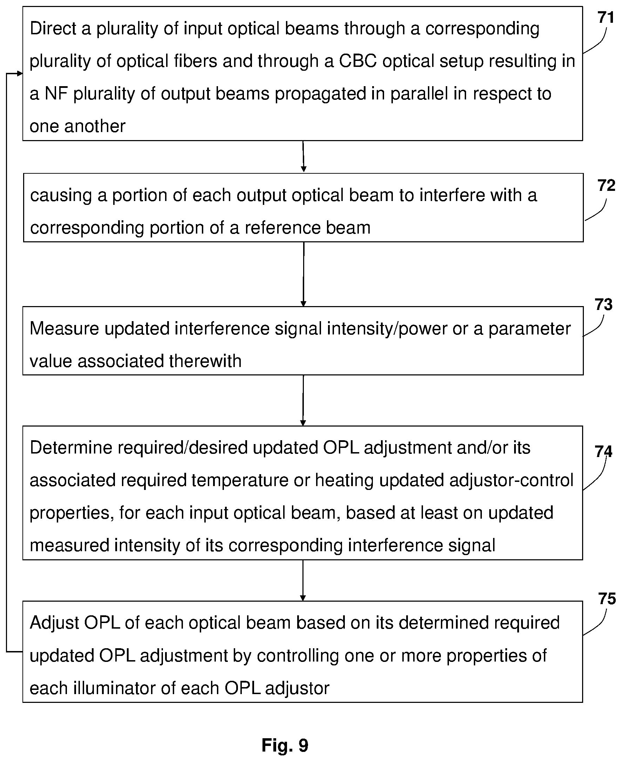

**Fig. 9** schematically illustrates main general steps of a method/process for OPL adjustment in a CBC system, according to some embodiments, using an array of OPL adjustors that are based on illumination-based heating of each optical fiber of the CBC system. This method includes:
directing a plurality of input optical beams of the CBC system through a corresponding plurality of optical fibers and through a CBC unit resulting in a plurality of output optical beams in a near field (NF) area of the CBC system (step **71);**
causing a portion of each output optical beam to interfere with a corresponding portion of a reference beam (step **72);**
for each optical channel of the CBC system:
measuring updated intensity related property (parameter value) of an interference signal of the output beam with a corresponding portion of the reference beam (step **73);**
determining required/desired updated OPL adjustment for each input optical beam, based at least on its corresponding updated intensity related property of the interference signal by/and determining one or more required OPL adjustor's control action including, for example, one or more optical properties adjustments/control such as illumination duration, intensity/power/amplitude, pulsation properties etc. (step **74);** and
adjusting OPL of each optical fiber based on its determined updated OPL adjustment by controlling the corresponding OPL adjustor of the respective channel and illuminating one or more fiber sections of the optical fiber of the corresponding optical channel for extending fiber length by an additional length ΔL by heating the fiber section(s) (step **75).**

According to other embodiments, the OPL of each optical beam may be adjustable by using other OPL adjustment techniques, not necessarily involving temperature control heating and/or cooling of fibers.

One such technique enables selecting one of multiple paths for the optical beam to propagate through that are enabled by the OPL adjustor.

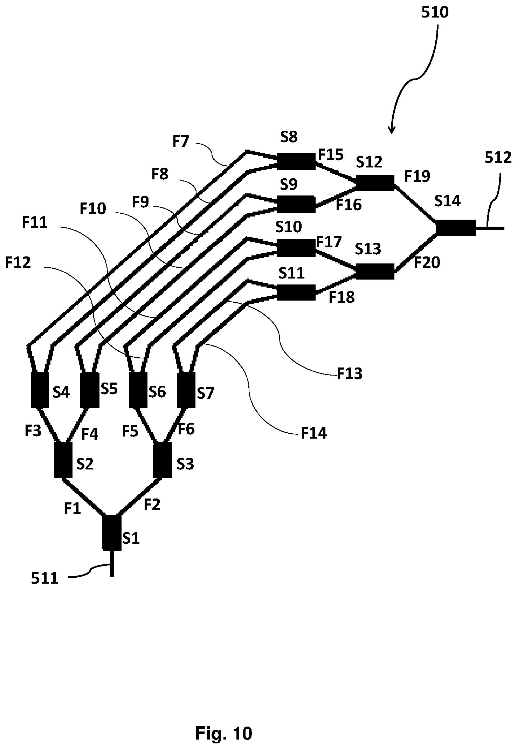

Reference is now made to **Fig. 10****,** schematically showing a router OPL adjustor **510,** for a multi-channel optical system. The router OPL adjustor **510** may be implemented as a photonic chip including multiple waveguides (not necessarily optical fibers) arranged as a manifold/cascade.

For example, the router OPL adjustor **510** may include a manifold of routing-fibers **F1-F20** connectable to one another via routing switches **S1-S14.** The router OPL adjustor **310** may have an input port **511** for receiving an input optical beam therethrough, and an output port **512** for outputting the optical beam after being routed to pass through a selected route associated with a selected OPL. The routing switches **S1-S14** may be controllably turned on or off for setting a selected OPL addition ΔOPL according to system requirements.

For example, if the length of the optical fiber of the CBC system is of initial length "L" at room temperature, and the required OPL adjustment is adding an additional length of ΔOPL the controller of the system/OPL adjustment subsystem may calculate the required ΔOPL value, and determine/select based on the value of the ΔOPL, the required routing fibers from the routing fibers **F1-F20** that will provide such fiber-length. For example, for a specific ΔOPL of value d, the required fiber-length addition may be of value ΔL and can be routed by selecting/routing the optical beam to pass through routing fibers **F1-F2-F6-F14-F18-F20** representing in this case, the shortest route between the input and output ports **511** and **512,** respectively. The routing is controlled by controlling of the switches' states. Following the previous example of the selected shortest route length: routing switch **S1** is set to route the incoming optical beam from the input port **511** towards routing fiber **F2; S3** is set to route the optical beam from fiber **F2** to fiber **F6, S7** is set to route the optical beam from fiber **F6** to fiber **F14, S11** is set to route the optical beam from fiber **F14** to fiber **F18, S13** is set to route the optical beam from fiber **F20** to the output port **312.** Therefore, each of the routing switches **S1-S14** may be configured to enable controllable routing switching between two states, each switching state routes the optical beam via a different waveguide/fiber (out of two in this example).

PLEASE PROVIDE routing switching timing/timespan for the maximum number of routing switches vs. the required OPL locking timing/timespan per channel.

According to yet other embodiments, OPL of an optical beam can also be adjusted in a controllable manner by using one or more reflectors, where the OPL length can be controlled by controlling angular orientation of trajectories of the optical beam, e.g., by controlling positioning of one or more of the reflectors and/or by controlling the angle of entrance of the optical beam to a cavity in which the reflectors are movably or fixedly located.

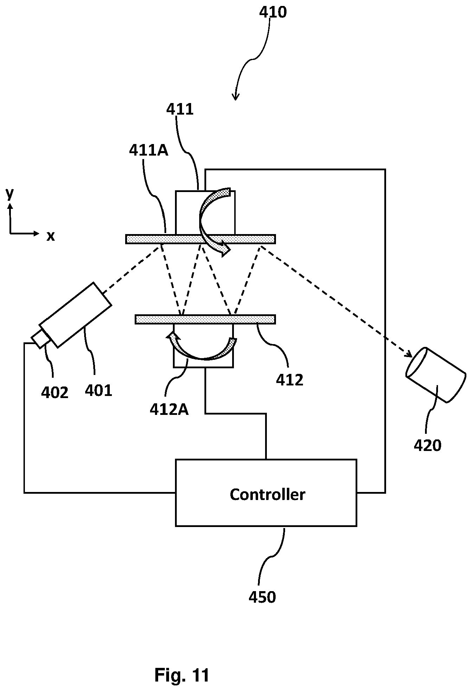

**Fig. 11** shows an exemplary OPL adjustor **410** that includes multiple reflectors such as a first reflector **411** and a second reflector **412** located one opposite the other and angularly in respect to a light source **401** from which the optical beam emanates and enters the OPL adjustor **410.** One or more of the reflectors **411/412** may be moveable/rotatable/positionable in a controllable manner via one or more actuators such as a first actuator **411A** e.g., having a micro electromechanical system (MEMS) including a micro-motor and movable elements, configured to control and adjust positioning of the first reflector **411** and a second actuator **412A** configured to control and adjust positioning of the second reflector **412.** The overall length of the optical beam inside the (cavity of) OPL adjustor **410** is determined by the direction orientation of each part of the optical beam as it propagates through the OPL adjustor **410** set by the positioning (angular position and location) of each of its reflectors **411** and **412** in relation of the direction orientation of the optical beam when entering the OPL adjustor, and in respect to the positioning of an input surface of an optical fiber **420** e.g., of the multi-channel optical system.

According to some embodiments, the direction of the entering optical beam may be controllable by controlling a light source (LS) actuator **402** configured to control at least directionality of the light when emitted therefrom.

A single controller **450** may control all actuators **402, 411A** and/or **412A,** e.g., based on one or more measured properties of the optical beams of the multi-channel optical system such as intensity of interference signals. As mentioned above, for other described types of OPL adjustments, the OPL adjustments to all channels of the multi-channel system may be performed in a parallel manner and separately for each channel, as well as the detection and processing/analysis.

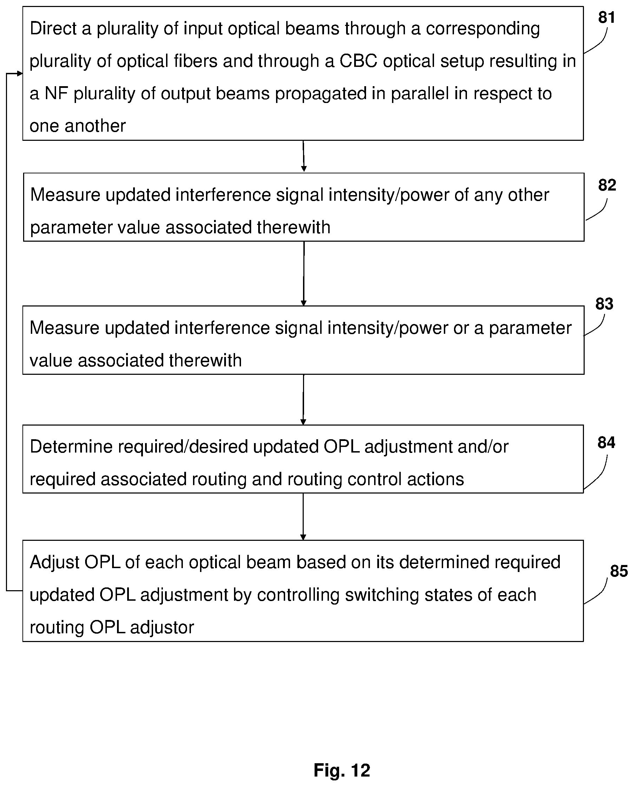

Reference is now made to **Fig. 12** schematically illustrating main steps of a process/method for OPL locking in a CBC system using an array of routing (opto-mechanical) OPL adjustors, according to some embodiments. The method may include the steps of:
directing a plurality of input optical beams of the CBC system through a corresponding plurality of optical fibers and through a CBC unit resulting in a plurality of output optical beams in a near field (NF) area of the CBC system (step **81);**
causing a portion of each output optical beam to interfere with a corresponding portion of a reference beam generating thereby a plurality (array) of corresponding interference signals (step **82);**
for each optical channel of the CBC system:
   measuring updated intensity related property (parameter value) of a corresponding interference signal, corresponding to the channel "i" (step **83);**
   determining required/desired updated OPL adjustment and/or required associated routing and routing control actions (updated adjustor-control properties) (step **84);** and
   adjusting OPL of each optical beam based on its determined required updated OPL adjustment and/or required associated routing and routing control actions, e.g., by controlling switching state of each of one or more routing switches of the routing OPL adjustor or by controlling positioning of at least one reflector or the propagation direction of the light passed through or generated by the routing OPL adjustor (step **85).**

### EXAMPLES

Example 1 is a detection and control subsystem for a multi-channel optical system guiding multiple optical beams through a guiding unit thereof comprising at least one fiber array of optical fibers, defining thereby an array of optical channels, the detection and control subsystem comprising at least:
(i) an optical path length (OPL) adjustment subsystem comprising an array of OPL adjustors each OPL adjustor being configured and located to controllably adjust OPL of an optical beam of a corresponding optical channel of the multi-channel optical system; and
(ii) at least one control unit configured at least to:
   for each optical beam of each optical channel of the multi-channel system:
   receive detected one or more updated properties associated with the optical beam;
   analyze the received one or more properties to determine required one or more updated adjustor-control properties, for achieving a desired associated OPL adjustment of the optical beam; and
   control the OPL adjustor of the optical channel, according to the determined one or more updated adjustor-control properties, for adjusting OPL of the optical beam, wherein the detection, analysis and OPL adjustment are performed in a parallel manner to all optical channels of the multi-channel optical system.

In example 2, the subject matter of example 1 may include, wherein the multi-channel optical system is a coherent beam combining (CBC) system and the OPL adjustment is done to reduce optical path difference (OPD) between the optical beams of the CBC system.

In example 3, the subject matter of example 2 may include, wherein the CBC system comprises at least:
(i) an illumination unit comprising one or more light sources configured to generate an array of input optical beams of similar optical properties;
(ii) a CBC unit, comprising one or more CBC elements, the CBC unit being configured to combine the array of input optical beams for forming a corresponding array of output optical beams propagated in parallel to one another defining an optical axis parallel to their propagation direction; and
(iii) a guiding unit comprising at least one array of optical fibers configured to guide the array of input optical beams to the CBC unit.

In example 4, the subject matter of example 3 may include, wherein the detection and control subsystem further comprises:
a referencing unit configured to generate or sample and direct a reference optical beam;
an optical setup comprising one or more optical elements, the optical setup being configured to direct the array of output optical beams such that a first portion of each optical beam is directed along the optical axis and a second portion of each optical beam is directed in another propagation direction to that of the optical axis such as to interfere with a corresponding portion of the reference optical beam, generating a corresponding interference signal, forming thereby an array of interference signals;
a detection unit configured to separately detect at least intensity of each interference signal and output a corresponding updated intensity related data, wherein the control unit is configured to parallelly receive and analyze updated intensity related data of each interference signal of each optical channel for determining the required one or more updated adjustor-control properties, for achieving an associated OPL adjustment of the corresponding optical beam, and parallelly control each OPL adjustor according to its determined updated adjustor-control properties.

In example 5, the subject matter of example 4 may include, wherein the updated intensity related data of each corresponding interference signal is indicative of one or more of:
- overall intensity of the corresponding interference signal;
- main peak of a beam profile of the corresponding interference signal;
- overall intensity of a main lobe of the beam profile of the corresponding interference signal.

In example 6, the subject matter of any one or more of examples 4 to 5 may include, wherein the control unit analyzes the received updated intensity related data of each corresponding interference signal by comparing the value thereof with: a preset reference value; or one or more values of one or more previous consecutive measured interference signals of the same corresponding optical channel.

In example 7, the subject matter of any one or more of examples 4 to 6 may include, wherein the detection and control subsystem further includes at least one of:
a phase locking unit comprising at least an array of phase shifters, each phase shifter being configured for shifting phase of an input optical beam of a corresponding optical channel;
a polarization locking unit comprising at least an array of polarizers, each polarizer being configured for adjusting polarization of an input optical beam of a corresponding optical channel;
a beam steering unit, configured for controllable beam steering by controlling relative phases between the input or output optical beams, wherein the phase and/or polarization locking and/or the beam steering is done based on detected intensity of each interference signal.

In example 7, the subject matter of any one or more of examples 1 to 7 may include, wherein each OPL adjustor of a corresponding optical channel comprises at least one optical routing unit configured to direct an incoming optical beam such as to pass through one optical route out of multiple selectable optical routes of the at least one optical routing unit of the OPL adjustor, wherein the one or more updated adjustor-control properties are associated with an updated selection of a specific optical route.

In example 9, the subject matter of example 8 may include, wherein each optical routing unit of the OPL adjustor comprises a fiber-manifold comprising a manifold of routing optical fibers wherein at least some of the routing optical fibers are connected to one or more other routing optical fibers of the fiber-manifold via one or more controllable routing switches for setting and selecting a specific optical route of a specific OPL addition ΔOPL to the OPL of the optical beam propagated through the corresponding optical fiber of the corresponding channel, by controlling state of each of the one or more controllable routing switches.

In example 10, the subject matter of example 9 may include, wherein the fiber-manifold is configured in a cascaded manner such that at least one of the controllable routing switches is operatively associated with at least two other controllable routing switches.

In example 11, the subject matter of example 8 may include, wherein each routing unit of each OPL adjustor comprises at least two reflectors configured to control an OPL addition ΔOPL by adjusting positioning of at least one of the reflectors and/or by adjusting direction of the optical beam when entering the routing unit.

In example 12, the subject matter of example 11 may include, wherein at least one of the reflectors is actuated by a controllable actuator including at least one motor and at least one moveable element for controllable adjustment of the reflector's positioning.

In example 13, the subject matter of any one or more of examples 8 to 12 may include, wherein the at least one control unit is configured to:
for each optical channel:
determine a suitable OPL addition ΔOPL to the OPL of the optical beam propagated through a corresponding optical fiber of the corresponding optical channel;
select a suitable optical routing state of the corresponding OPL adjustor that corresponds to the determined OPL addition ΔOPL; and
control at least one optical routing unit of the OPL adjustor of the optical channel, according to the selected optical route.

In example 14, the subject matter of any one or more of examples 1 to 7 may include, wherein each OPL adjustor is configured for controlling temperature of at least one fiber section of a corresponding optical fiber of a fiber array of the multi-channel optical system, for adjusting length of the optical fiber of a corresponding fiber-array of the multi-channel optical system.

In example 15, the subject matter of example 14 may include, wherein each OPL adjustor is configured for one of: active heating of each thermal conductive element of the OPL adjustor, enabling only natural passive cooling of the optical fiber section being heated by natural heat dissipation; or active heating and active cooling of each thermal conductive element of the OPL adjustor.

In example 16, the subject matter of any one or more of examples 14 to 15, wherein each OPL adjustor comprises at least one thermal conductive element that is coupled to a corresponding fiber section of an optical fiber of the multi-channel optical system, wherein the thermal conductive element is at least controllably heated for extending length of the corresponding optical fiber and therefore for extending OPL of a corresponding optical beam passed therethrough.

In example 17, the subject matter of example 16 may include, wherein each thermal conductive element comprises:
a wire or strap that is wrapped around an outer surface of the corresponding fiber section; or
a ridged thermal conductive element, where the optical fiber is wrapped around the ridged thermal conductive element.

In example 18, the subject matter of any one or more of examples 14 to 15 may include, wherein each thermal conductive element is ridged and is coupled to the corresponding optical fiber by: using one or more attachment or coupling means; or by having a section of the corresponding optical fiber being wrapped around the ridged thermal-conductive element.

In example 19, the subject matter of example 14 may include, wherein each controllable temperature adjustor comprises a thermoelectric cooler for active heating and cooling of the at least one fiber section.

In example 20, the subject matter of any one or more of examples 14 to 19 may include, wherein the OPL adjustment subsystem further comprises a sensors array comprising multiple temperature sensors, each temperature sensor being located and configured for measuring temperature in proximity to a temperature control area of the corresponding optical fiber of a corresponding optical channel, where the OPL adjustor corresponding thereto is located, wherein each OPL adjustment is done based on measured current temperature of the corresponding temperature control area of the corresponding optical fiber.

In example 21, the subject matter of example 14 may include, wherein the OPL adjustor comprises at least one illuminator, configured to illuminate a corresponding fiber section of a corresponding optical fiber of a corresponding optical channel associated therewith, by illumination of that fiber section.

In example 22, the subject matter of example 21 may include, wherein the at least one illuminator is located externally to its corresponding fiber section, and wherein each illuminator is configured to irradiate light of one or more wavelengths or wavelength bands that correspond to spectral absorbance characteristics of at least one part of the fiber section being illuminated.

In example 23, the subject matter of any one or more of examples 21 to 22 may include, wherein the at least one illuminator is configured and located such that light radiated therefrom is propagated angularly to the propagation direction of the optical beam propagated through the corresponding fiber section, forming non-zero angle between the propagation direction of the optical beam and the propagation direction of light radiated from the at least one illuminator.

In example 24, the subject matter of example 14 may include, wherein each OPL adjustor comprises an illuminator including one or more light sources and an added fiber-section connected to an optical fiber of a corresponding optical channel of the multi-channel optical system, wherein the illuminator is located and configured to illuminate at least part of the added fiber-section for heating thereof, for extending the overall length of the added fiber-section for adjusting OPL of the optical beam propagated through the corresponding optical fiber and added fiber-section.

In example 25, the subject matter of example 24 may include, wherein the added fiber-section is a doped optical fiber, having at least one dopant with known optical absorbance properties and wherein the illuminator of the OPL adjustor is configured to emit light corresponding to the optical absorbance properties of the added fiber-section.

In example 26, the subject matter of example 25 my include, wherein the illuminator of the OPL adjustor is configured to be connected to the added fiber-section such as to illuminate a clad part of the added fiber-section.

In example 27, the subject matter of any one or more of examples 25 to 26 may include, wherein the added fiber-section is doped with a Thulium (Tm) dopant.

In example 28, the subject matter of any one or more of examples 25 to 27 may include, wherein each optical fiber of the multi-channel optical system is of different optical absorbance properties than those of each added fiber-section.

In example 29, the subject matter of any one or more of examples 21 to 28 may include, wherein the at least one illuminator is configured such that one or more illumination properties thereof are controllable.

In example 30, the subject matter of example 29 may include, wherein the one or more illumination properties include one or more of:
illumination wavelength and/or wavelength bandwidth;
illumination intensity, power, amplitude, spatial distribution and/or flux;
radiation aperture;
radiation propagation directionality;
illumination duration;
one or more illumination pulsation properties.

Example 31 is a method for adjusting optical path length (OPL) of a multi-channel optical system using a fiber array of multiple optical fibers for guiding corresponding multiple optical beams therethrough, defining a corresponding array of optical channels, the method comprising at least:
providing an OPL adjustment subsystem comprising at least one array of OPL adjustors, each OPL adjustor being configured at least for adjusting OPL a corresponding optical beam of the multi-channel optical system;
providing a control unit configured for processing received data and controlling at least each OPL adjustor;
for each optical channel:
   detecting one or more updated optical properties associated with the optical beam of the corresponding optical channel, outputted from the multi-channel optical system, using a detection unit;
   analyzing the received one or more optical properties of the optical beam of the corresponding optical channel, to determine one or more updated adjustor-control properties associated with a corresponding required updated OPL adjustment for the optical beam propagated through the corresponding optical channel, using the control unit; and
   adjusting OPL of the corresponding optical beam by controlling a corresponding OPL adjustor, according to its determined one or more updated adjustor-control properties, using the control unit, wherein the detection, analysis and OPL adjustment are performed in a parallel manner to all optical channels of the multi-channel optical system.

In example 32, the subject matter of example 31 may include, wherein the multi-channel optical system is a coherent beam combining (CBC) system and the OPL adjustment is done to reduce optical path difference (OPD) between optical beams of the CBC system.

In example 33, the subject matter of example 32 may include, wherein the method further comprises:
(i) generating an array of input optical beam of similar optical properties, using an illumination unit of the multi-channel optical system;
(ii) combining the array of input optical beams for forming a corresponding array of output optical beams propagated in parallel to one another defining an optical axis parallel to their propagation direction, using a CBC unit of the multi-channel optical system; and
(iii) guiding the array of input optical beams to the CBC unit, using a guiding unit comprising at least one fiber array comprising multiple optical fibers.

In example 34, the subject matter of any one or more of examples 31 to 33 may include, wherein the method further comprises:
generating or sampling and directing a reference optical beam;
directing the array of output optical beams such that a first portion of each optical beam is directed along the optical axis and a second portion of each optical beam is directed in another propagation direction to that of the optical axis such as to interfere with a corresponding portion of the reference optical beam, generating a corresponding interference signal, forming thereby a corresponding array of interference signal;
separately detecting at least intensity of each interference signal and outputting a corresponding updated intensity related data, wherein the control unit is configured to parallelly receive and analyze the updated intensity related data of each interference signal of each optical channel for determining the required one or more updated adjustor-control properties, for achieving an associated OPL adjustment of the corresponding optical beam, and parallelly control each OPL adjustor according to its determined updated adjustor-control properties.

In example 35, the subject matter of example 34 may include, wherein the updated intensity related data of each corresponding interference signal is indicative of one or more of:
- overall intensity of the corresponding interference signal;
- main peak of a beam profile of the corresponding interference signal;
- overall intensity of a main lobe of the beam profile of the corresponding interference signal.

In example 36, the subject matter of any one or more of examples 34 to 35 may include, wherein the received updated intensity related data of each corresponding interference signal is analyzed by comparing the value thereof with: a preset reference value; or one or more values of one or more previous consecutive measured intensity related values of the interference signals of the same corresponding optical fiber.

In example 37, the subject matter of any one or more of examples 34 to 36 may include, wherein the method further comprises at least one of:
adjusting phase of each input optical beam of each optical channel, using a phase locking unit comprising an array of phase shifters;
adjusting polarization of each input optical beam of each optical channel, using a polarization locking unit comprising at least an array of polarizers;
controlling beam steering of the output optical beams by controlling relative phases between the input or output optical beams, wherein the phase and/or polarization locking and/or the beam steering is done based on detected intensity of each interference signal.

In example 38, the subject matter of any one or more of examples 31 to 37 may include, wherein the OPL adjustment of each optical beam is done by directing an incoming optical beam such as to pass through one optical route out of multiple selectable optical routes enabled by the OPL adjustor, wherein the one or more updated adjustor-control properties are associated with an updated selection of a specific optical route.

In example 39, the subject matter of example 38 may include, wherein the routing of the incoming optical beam is done by using OPL adjustor that comprises a fiber-manifold comprising a manifold of routing optical fibers wherein at least some of the routing optical fibers are connected to one or more other routing optical fibers of the fiber-manifold via one or more controllable routing switches for setting and selecting a specific optical route of a specific OPL addition ΔOPL to the OPL of the optical beam propagated through the corresponding optical fiber of the corresponding channel, by controlling state of each of the one or more controllable routing switches.

In example 40, the subject matter of example 38 may include, wherein the routing of the optical beam is done by using OPL adjustor that comprises at least one routing unit, each routing unit comprising at least two reflectors configured to control an OPL addition ΔOPL by adjusting positioning of at least one of the reflectors and/or by adjusting direction of the optical beam when entering the routing unit.

In example 41, the subject matter of any one or more of examples 38 to 40 may include, wherein the method further comprises:
for each optical channel:
determining a suitable OPL addition ΔOPL to the OPL of the optical beam propagated through a corresponding optical fiber of the corresponding optical channel;
selecting a suitable optical routing state of the corresponding OPL adjustor that corresponds to the determined OPL addition ΔOPL; and
controlling a corresponding at least one optical routing unit of the corresponding OPL adjustor, according to the selected optical route.

In example 42, the subject matter of any one or more of examples 31 to 37 may include, wherein the OPL adjustment is done by controlling temperature of at least one fiber section of a corresponding optical fiber of a fiber array of the multi-channel optical system, for adjusting length of the optical fiber of a corresponding fiber-array of the multi-channel optical system, wherein each OPL adjustor is configured at least for heating one or more fiber sections of a corresponding optical fiber of the multi-channel optical system.

In example 43, the subject matter of example 42 may include, wherein each OPL adjustor is configured for one of: active heating of each thermal conductive element of the OPL adjustor, enabling only natural passive cooling of the optical fiber section being heated by natural heat dissipation; or active heating and active cooling of each thermal conductive element of the OPL adjustor.

In example 44, the subject matter of any one or more of examples 42 to 43 may include, wherein each OPL adjustor comprises an illuminator including one or more light sources and an added fiber-section connected to an optical fiber of a corresponding optical channel of the multi-channel optical system, wherein the OPL adjustment is done by illumination of at least part of the added fiber-section for heating thereof, for extending the overall length of the added fiber-section for adjusting OPL of the optical beam propagated through the corresponding optical fiber and added fiber-section.

In example 45, the subject matter of example 44 may include, wherein one or more illumination properties of the illuminator of the OPL adjustor are controllable, wherein the one or more illumination properties include one or more of:
illumination wavelength and/or wavelength bandwidth;
illumination intensity, power, amplitude, spatial distribution and/or flux;
radiation aperture;
radiation propagation directionality;
illumination duration;
one or more pulsation properties.

In example 46, the subject matter of any one or more of examples 44 to 45 may include, wherein the added fiber-section is a doped optical fiber, having at least one dopant with known optical absorbance properties and wherein the illuminator of the OPL adjustor is configured to emit light corresponding to the optical absorbance properties of the added fiber-section.

In example 47, the subject matter of any one or more of examples 44 to 46 may include, wherein the illuminator of the OPL adjustor is configured to be connected to the added fiber-section such as to illuminate a clad part of the added fiber-section.

In example 48, the subject matter of example 43 may include, wherein the temperature control is done by illuminating an fiber section of each optical fiber of the multi-channel optical system, wherein the OPL adjustor comprises at least one illuminator, configured to heat a corresponding fiber section of a corresponding optical fiber of a corresponding optical channel associated therewith, by illumination of that fiber section.

In example 49, the subject matter of example 48 may include, wherein the at least one illuminator is configured and located such that light radiated therefrom is propagated angularly to the propagation direction of the optical beam propagated through the corresponding fiber section, forming non-zero angle between the propagation direction of the optical beam and the propagation direction of the irradiated heating light.

In example 50, the subject matter of any one or more of examples 48 to 49 may include, wherein the at least one illuminator is configured such that one or more illumination properties thereof are controllable.

In example 51, the subject matter of example 50 may include, wherein the one or more illumination properties include one or more of:
illumination wavelength and/or wavelength bandwidth;
illumination intensity, power, amplitude, spatial distribution and/or flux;
radiation aperture;
radiation propagation directionality;
illumination duration;
one or more pulsation properties.

In example 52, the subject matter of any one or more of examples 42 to 51 may include, wherein the method further comprises measuring temperature in proximity to a temperature control area of each optical fiber, using a sensors array comprising multiple temperature sensors, each temperature sensor being located and configured for sensing temperature of a fiber section of an optical fiber of a specific optical channel, in the temperature control area in which the OPL adjustor corresponding thereto is located, wherein the required temperature adjustment for each OPL adjustment is done based on measured current temperature of the corresponding temperature control area of the corresponding optical fiber.

Additional or alternative aspects of disclosed embodiments pertain to an OPL adjustor for adjusting OPL of an optical beam passed through an optical fiber, where the OPL adjustment is based on temperature control of one or more fiber sections of the optical fiber or an added fiber-section connected thereto.

Additional or alternative aspects of disclosed embodiments pertain to an OPL adjustor for adjusting OPL of an optical beam passed through an optical fiber, where the OPL adjustment is based on routing of the optical beam via one of several selectable optical routes.

Although the above description discloses a limited number of exemplary embodiments of the invention, these embodiments should not apply any limitation to the scope of the invention, but rather be considered as exemplifications of some of the manners in which the invention can be implemented.

The method and/or processes described herein may be implemented by using any one or more software and/or hardware modules, devices, systems, methods, algorithms, processors etc., which may be adjustable and/or programmable.

The system, module, unit, device etc. or parts thereof, may be programmed to perform particular functions pursuant to computer readable and executable instructions, rules, conditions etc. from programmable hardware and/or software-based execution modules that may implement one or more methods or processes disclosed herein, and therefore can, in effect, be considered as disclosing a "special purpose computer" particular to embodiments of each disclosed method/process.

The computer readable and executable instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

In the above disclosure, unless otherwise stated, terms such as "substantially", "about", approximately, etc., that specify a condition or relationship characterizing a feature or features of an embodiment of the invention, are to be understood to mean that the condition or characteristic is defined to within tolerances that are acceptable for operation of the embodiment for an application for which it is intended.

It is important to note that the methods/processes and/or systems/devices/subsystems/apparatuses etc., disclosed in the above Specification, are not to be limited strictly to flowcharts and/or diagrams provided in the Drawings. For example, a method may include additional or fewer processes or steps in comparison to what is described in the figures. In addition, embodiments of the method are not necessarily limited to the chronological order as illustrated and described herein.

It is noted that terms such as "processing", "computing", "calculating", "determining", "establishing", "analyzing", "checking", "estimating", "deriving", "selecting", "inferring", identifying", "detecting" and/or the like, may refer to operation(s) and/or process(es) of a computer, a computing platform, a computing system, or other electronic computing device(s), that manipulate and/or transform data represented as physical (e.g., electronic or optical signal) quantities within the computer's registers and/or memories into other data similarly represented as physical quantities within the computer's registers and/or memories or other information storage medium that may store instructions to perform operations and/or processes.

Terms used in the singular shall also include a plural scope, except where expressly otherwise stated or where the context otherwise requires.

In the description and claims of the present application, each of the verbs, "comprise" "include" and "have", and conjugates thereof, are used to indicate that the subject(s) of the verb are not necessarily a complete listing of components, elements, features, functions or parts of the subject(s) of the verb.

Unless otherwise stated, the use of the expression "and/or" between the last two members of a list of options for selection indicates that a selection of one or more of the listed options is appropriate and may be made i.e., enabling all possible combinations of one or more of the specified options. Further, the use of the expression "and/or" may be used interchangeably with the expressions "at least one of the following", "any one of the following" or "one or more of the following", followed by a listing of the various options.

It is appreciated that certain features of the invention, which are, for clarity, described in the context of separate embodiments or example, may also be provided in combination in a single embodiment. Conversely, various features of the invention, which are, for brevity, described in the context of a single embodiment, example and/or option, may also be provided separately or in any suitable sub-combination or as suitable in any other described embodiment, example or option of the invention. Certain features described in the context of various embodiments, examples and/or optional implementation are not to be considered essential features of those embodiments, unless the embodiment, example and/or optional implementation is inoperative without those elements.

The number of elements shown in the Figures should by no means be construed as limiting and is for illustrative purposes only.

## Claims

1. A detection and control subsystem (1010, 300) for a multi-channel optical system guiding multiple optical beams through a guiding unit thereof comprising at least one fiber array (1100, 110, 220) of optical fibers, defining thereby an array of optical channels, the detection and control subsystem (1010, 300) comprising:
(i) a referencing unit (1003) configured to generate or sample and direct a reference optical beam;
(ii) an optical setup comprising one or more optical elements (325, 1003), the optical setup being configured to direct an array of output optical beams such that a first portion of each optical beam is directed along an optical axis and a second portion of each optical beam is directed in another propagation direction to that of the optical axis such as to interfere with a portion of the reference optical beam, generating a corresponding interference signal, forming thereby an array of interference signals;
(iii) a detection unit (1500, 150, 330) configured to separately detect at least an intensity of each interference signal and output a corresponding updated intensity related data;
(iv) an optical path length "OPL" adjustment subsystem (100, 310, 1200) comprising an array of OPL adjustors each OPL adjustor (1201, 120, 311, 410, 510, 30, 40) being configured and located to controllably adjust OPL of an optical beam of a corresponding optical channel of the multi-channel optical system (1000, 200); and
(v) at least one controller (1600, 160, 340) configured at least to:
for each optical beam of each optical channel of the multi-channel system (1000, 200):
• receive detected one or more updated properties, which includes the intensity of the interference signal associated with the optical beam;
• analyze the received one or more properties to determine required one or more updated adjustor-control properties, for achieving a desired associated OPL adjustment of the optical beam; and
• control the OPL adjustor (1201, 120, 311, 410, 510, 30, 40) of the optical channel, according to the determined one or more updated adjustor-control properties, for adjusting OPL of the optical beam,
wherein the controller (1600, 160, 340) is configured to parallelly receive and analyze the outputted updated intensity related data of each interference signal of each optical channel for determining the required one or more updated adjustor-control properties, for achieving an associated OPL adjustment of the optical beam of the specific channel, and parallelly control each OPL adjustor according to its determined updated adjustor-control properties
wherein the detection, analysis and OPL adjustment are performed in a parallel manner to all optical channels of the multi-channel optical system,
wherein each OPL adjustor (400, 510) of a corresponding optical channel comprises:
one or more illuminators; and
an additional fiber section,
wherein the illuminators are configured to illuminate and thereby heat a cladding of the additional fiber section.

2. The detection and control subsystem of claim 1, wherein the one or more illuminators comprises a light emitting diode "LED".

3. The detection and control subsystem of any of claims 1-2, wherein the additional fiber section comprises a dopant having absorption lines corresponding to illumination emitted by the one or more illuminators.

4. The detection and control subsystem of claim 3, wherein the dopant is Thulium.

5. The detection and control subsystem of claim 4, wherein the illumination emitted by the one or more illuminators has a wavelength peak at 793nm corresponding to an absorption line of the Thulium.

6. The detection and control subsystem of any of claims 1-5, wherein each optical fiber of the multi-channel optical system is of different optical absorbance properties than those of each additional fiber section.

7. The detection and control subsystem of any one of claims 1-6, wherein the at least one illuminator is configured such that one or more illumination properties thereof are controllable, wherein the one or more illumination properties include one or more of:
illumination wavelength and/or wavelength bandwidth;
illumination intensity, power, amplitude, spatial distribution and/or flux;
radiation aperture;
radiation propagation directionality;
illumination duration; and/or
one or more illumination pulsation properties.

8. The detection and control subsystem of any one of claims 1-7, wherein the OPL adjustment subsystem further comprises a sensors array comprising multiple temperature sensors, each temperature sensor being located and configured for measuring temperature in proximity to a temperature control area of the corresponding optical fiber of a corresponding optical channel, where the OPL adjustor corresponding thereto is located, wherein each OPL adjustment is done based on measured current temperature of the corresponding temperature control area of the corresponding optical fiber.

9. A method for adjusting optical path length , OPL, of a multi-channel optical system using a fiber array of multiple optical fibers for guiding corresponding multiple optical beams therethrough, defining a corresponding array of optical channels, the method comprising at least:
providing a referencing unit (1003) configured to generate or sample and direct a reference optical beam;
providing an optical setup comprising one or more optical elements (325, 1003), the optical setup being configured to direct an array of output optical beams such that a first portion of each optical beam is directed along an optical axis and a second portion of each optical beam is directed in another propagation direction to that of the optical axis such as to interfere with a portion of the reference optical beam, generating a corresponding interference signal, forming thereby an array of interference signals;
providing a detection unit (1500, 150, 330) configured to separately detect at least an intensity of each interference signal and output a corresponding updated intensity related data;
providing an OPL adjustment subsystem (100, 310, 1200) comprising at least one array of OPL adjustors (1200), each OPL adjustor (1201, 120, 311, 410, 510, 30, 40) being configured at least for adjusting OPL a corresponding optical beam of the multi-channel optical system;
providing a controller (1600, 160, 340) configured for processing received data and controlling at least each OPL adjustor (1201, 120, 311, 410, 510, 30, 40);
for each optical channel:
detecting one or more updated optical properties associated with the optical beam of the corresponding optical channel, outputted from the multi-channel optical system, using a detection unit;
analyzing the received one or more optical properties of the optical beam of the corresponding optical channel, which includes the intensity of the interference signal, to determine one or more updated adjustor-control properties associated with a corresponding required updated OPL adjustment for the optical beam propagated through the corresponding optical channel, using the control unit; and
adjusting OPL of the corresponding optical beam by controlling a corresponding OPL adjustor, according to its determined one or more updated adjustor-control properties, using the control unit,
wherein the controller (1600, 160, 340) is configured to parallelly receive and analyze the outputted updated intensity related data of each interference signal of each optical channel for determining the required one or more updated adjustor-control properties, for achieving an associated OPL adjustment of the optical beam of the specific channel, and parallelly control each OPL adjustor according to its determined updated adjustor-control properties,
wherein the detection, analysis and OPL adjustment are performed in a parallel manner to all optical channels of the multi-channel optical system,
wherein each OPL adjustor (400, 510) of a corresponding optical channel comprises:
one or more illuminators; and
an additional fiber section,
wherein the illuminators are configured to illuminate and thereby heat a cladding of the additional fiber section.

10. The method of claim 9, wherein the one or more illuminators are provided comprising a light emitting diode "LED".

11. The method of any of claims 9-10, wherein the additional fiber section is provided comprising a dopant having absorption lines corresponding to illumination emitted by the one or more illuminators, wherein optionally the dopant is Thulium.

12. The method of claim 11, wherein the dopant is Thulium, and wherein the illumination emitted by the one or more illuminators has a wavelength peak at 793nm corresponding to an absorption line of the Thulium.

13. The method of any one of claims 9-12, wherein the at least one illuminator is configured such that one or more illumination properties thereof are controllable, wherein the one or more illumination properties include one or more of:
illumination wavelength and/or wavelength bandwidth;
illumination intensity, power, amplitude, spatial distribution and/or flux;
radiation aperture;
radiation propagation directionality;
illumination duration; and/or
one or more illumination pulsation properties.

14. The method of any one of claims 9-13, wherein the OPL adjustment subsystem is provided further comprising a sensors array comprising multiple temperature sensors, each temperature sensor being located and configured for measuring temperature in proximity to a temperature control area of the corresponding optical fiber of a corresponding optical channel, where the OPL adjustor corresponding thereto is located, wherein each OPL adjustment is done based on measured current temperature of the corresponding temperature control area of the corresponding optical fiber.

15. The detection and control subsystem of any one of claims 1-8, or the method of any of claims 9-14, wherein the multi-channel optical system is a coherent beam combining "CBC" system (1000, 200) and the OPL adjustment is done to reduce optical path difference "OPD" between optical beams of the CBC system (1000, 200).
